# EUROPÄISCHE PATENTSCHRIFT

(11) **EP 3 053 206 B1**
(45) Veröffentlichungstag und Bekanntmachung des Hinweises auf die Patenterteilung: **02.08.2017**
(21) Anmeldenummer: 14777305.5
(22) Anmeldetag: 29.09.2014
(51) Int. Cl.: H01M 2/10, B60L 11/18, H01M 2/12, C08L 69/00, B60K 1/04, B60L 3/00

(54) **BATTERIEMODUL MIT SICHERHEITSABSCHNITT, BATTERIEPACK UND ELEKTROFAHRZEUG**
BATTERY MODULE HAVING A SAFETY SECTION, BATTERY PACK, AND ELECTRIC VEHICLE
MODULE DE BATTERIE DOTÉ D'UN SEGMENT DE SÉCURITÉ, BLOC BATTERIE ET VÉHICULE ÉLECTRIQUE

(30) Priorität: 02.10.2013 EP 13187016
(43) Veröffentlichungstag der Anmeldung: 10.08.2016
(73) Patentinhaber: Covestro Deutschland AG, 51373 Leverkusen (DE)
(72) Erfinder: BRAMBRINK, Roland, 42799 Leichlingen (DE); GROSSER, Ulrich, 51515 Kürten (DE)
(74) Vertreter: Levpat
(86) Internationale Anmeldenummer: PCT/EP2014/070734
(87) Internationale Veröffentlichungsnummer: WO 2015/049188

(56) Entgegenhaltungen:
- EP-A1- 1 035 599
- EP-A1- 2 590 240
- DE-A1-102010 041 387
- JP-A- 2001 058 332
- JP-A- 2009 007 487
- US-A1- 2008 220 321
- US-A1- 2010 215 998

## Beschreibung

Die Erfindung betrifft ein Batteriemodul mit einem Batteriemodulgehäuse, wobei das Batteriemodulgehäuse einen Batteriemodulinnenraum umschließt und wobei das Batteriemodulgehäuse Batteriemodulinnenraum-seitig Aufnahmen für eine vorgegebene Anzahl von Batteriezellen aufweist. Weiterhin betrifft die Erfindung ein Batteriepack mit einem Batteriepackgehäuse, wobei das Batteriepackgehäuse einen Batteriepackinnenraum umschließt und wobei das Batteriepackgehäuse Batteriepackinnenraum-seitig mindestens eine Aufnahme für ein Batteriemodul aufweist. Schließlich betrifft die Erfindung noch ein Elektrofahrzeug.

Batteriemodule und Batteriepacks der zuvor genannten Art werden als Energiespeicher zunehmend in Elektrofahrzeugen verwendet. Elektrofahrzeuge verfügen über einen Elektromotor, der das Fahrzeug entweder allein oder - bei sogenannten Elektrohybridfahrzeugen - in Kombination mit einem Kraftstoffmotor antreibt, sowie über eine Anzahl von Batteriezellen, um die zum Betrieb des Elektromotors erforderliche Energie zu speichern. Um eine möglichst hohe Fahrleistung erzielen zu können, bevor die Batteriezellen wieder aufgeladen werden müssen, wird üblicherweise eine große Anzahl von Batteriezellen mit einer großen Gesamtkapazität in das Fahrzeug integriert. Unter Batteriezellen werden vorliegend insbesondere aufladbare Batteriezellen, d.h. Akkus, verstanden.

Eine vorgegebene Anzahl von Batteriezellen wird typischerweise zu einem Batteriemodul zusammengefasst, in dem die Batteriezellen von einem Batteriemodulgehäuse umgeben werden. Mehrere solcher Batteriemodule werden weiterhin typischerweise zu einem Batteriepack zusammengefasst, welches dann in ein Elektrofahrzeug eingebaut wird.

Das Bedürfnis nach großem Stauraum bzw. großer möglicher Nutzlast bei gleichzeitig geringem Verbrauch äußert sich bei Elektrofahrzeugen im Bestreben, die Größe und das Gewicht der Batteriezellen bzw. Batteriemodule oder Batteriepacks möglichst gering zu halten. Aus diesem Grund werden bevorzugt Batteriezellen mit einer hohen Energiespeicherdichte verwendet, wie insbesondere Lithiumionenakkus.

Wegen ihrer hohen Energiedichte ergibt sich durch diese Batteriezellen jedoch auch ein Gefährdungspotential für das Fahrzeug. Bei Beschädigung und/oder Kurzschluss einer Batteriezelle, beispielsweise durch einen Crash, kann es zum Austritt einer heißen Flamme aus der Batteriezelle kommen. Eine solche Flamme kann Fahrzeugbrände und sogar Fahrzeugexplosionen hervorrufen. Insbesondere kann die dichte Packung der Batteriezellen innerhalb eines Batteriemoduls dazu führen, dass die Flamme aus einer Batteriezelle andere Batteriezellen ebenfalls beschädigt, so dass es hierdurch gleichsam zu einer Kettenreaktion mit fatalen Folgen für das Fahrzeug und möglicherweise für seine Insassen kommen kann.

Um ein unkontrolliertes Austreten einer Flamme aus beschädigten Batteriezellen zu verhindern, weisen aus dem Stand der Technik bekannte Batteriezellen zum Teil Sollbruchstellen auf, so dass im Falle eines Kurzschlusses eine Flamme nicht in beliebige Richtungen, sondern in eine durch die Sollbruchstelle vorgegebene Richtung aus der Batteriezelle austritt. Typischerweise befindet sich eine solche Sollbruchstelle im Bodenbereich der jeweiligen Batteriezelle, so dass eine Flamme gezielt nach unten aus der Batteriezelle austritt. Dadurch kann beispielsweise das Risiko reduziert werden, dass benachbarte Zellen durch einen seitlich austretenden Flammenstrahl ebenfalls beschädigt und insbesondere entzündet werden.

Um das von den Batteriezellen ausgehende Gefährdungspotenzial weiter zu reduzieren, werden das Batteriemodulgehäuse um die Batteriezellen und das Batteriepackgehäuse um die Batteriemodulgehäuse im Stand der Technik üblicherweise so starr und robust ausgebildet, dass die Batteriezellen im Falle eines Crashs möglichst unbeschädigt bleiben. Zu diesem Zweck werden Batteriemodulgehäuse und Batteriepackgehäuse typischerweise aus einem dicken Metall-, insbesondere Stahlblech gefertigt, um die Batteriezellen gleichsam in einer Art Panzerschrank vor einem möglichen Crash zu schützen.

Diese Stahlgehäuse haben jedoch den Nachteil, dass sie schwer und teuer sind und damit die Wirtschaftlichkeit des Elektrofahrzeugs herabsetzen. Weiterhin haben sich einige Stahlgehäuse, insbesondere zur Gewichtsoptimierung dünner ausgelegte Stahlgehäuse, als unzureichend erwiesen, um die Batteriezellen bei einem Crash ausreichend zu schützen.

Stahlgehäuse haben zudem den Nachteil, dass bei Beschädigung einer Batteriezelle innerhalb des Gehäuses die aus der Batteriezelle austretende Flamme den Batteriemodulinnenraum stark erhitzen kann. Dadurch können weitere Batteriezellen beschädigt werden, so dass es zu der gefürchteten Kettenreaktion der Batteriezellen kommen kann. Ein Batteriemodul gemäß dem Stand der Technik wird beispielsweise in der Druckschrift US2008/220321A1 beschrieben.

Ausgehend von diesem Stand der Technik liegt der vorliegenden Erfindung die Aufgabe zugrunde, die Betriebssicherheit eines Batteriemoduls, wie z.B. eines Batteriemoduls für ein Elektrofahrzeug, zu verbessern und gleichzeitig Nachteile von schweren und teuren Stahlgehäusen zu reduzieren oder zu vermeiden.

Diese Aufgabe wird durch ein Batteriemodul mit den in Anspruch 1 genannten Merkmalen gelöst. Ein solches Batteriemodul umfasst u.a. ein Batteriemodulgehäuse, wobei das Batteriemodulgehäuse einen Batteriemodulinnenraum umschließt und wobei das Batteriemodulgehäuse Batteriemodulinnenraum-seitig Aufnahmen für eine vorgegebene Anzahl von Batteriezellen aufweist, wobei das Batteriemodulgehäuse im Bereich mindestens einer Aufnahme einen Sicherheitswandabschnitt umfasst, dessen Materialeigenschaften und dessen Dicke derart beschaffen sind, dass der Sicherheitswandabschnitt im Nadelflammtest nach DIN EN ISO 11925-2 nach maximal 45s, bevorzugt nach maximal 20 s, weiter bevorzugt nach maximal 10 s, insbesondere maximal 5 s, ein Durchbrennen zeigt.

Beim Durchbrennen des Sicherheitswandabschnitts nach maximal 45 s, besser maximal 20 s, vorzugsweise maximal 10 s, insbesondere maximal 5 s, im Nadelflammtest, d.h. nach einer maximalen Beflammungszeit mit einer definierten Flamme, bildet sich im Sicherheitswandabschnitt und damit im Batteriemodulgehäuse eine Öffnung.

Durch das Vorsehen eines solchen Sicherheitswandabschnitts im Bereich mindestens einer Aufnahme wird daher erreicht, dass das Batteriemodulgehäuse im Falle einer Batteriezellen-Fehlfunktion durch eine aus der Batteriezelle austretende Flamme ausreichend schnell durchbrennt, so dass die durch die Flamme freiwerdende Energie durch die so entstandene Öffnung im Batteriemodulgehäuse aus dem Batteriemodul entweichen kann.

Die aus einer defekten Batteriezelle, insbesondere aus einer Lithiumionen-Batteriezelle, austretende Flamme weist typischerweise eine höhere Temperatur auf als die Flamme im Nadelflammtest nach DIN EN ISO 11925-2, beispielsweise eine Temperatur von 600 °C oder höher. Es wurde festgestellt, dass bei einem Sicherheitswandabschnitt, der im Nadelflammtest nach maximal 45 s, bevorzugt maximal 20 s, weiter bevorzugt maximal 10 s, insbesondere maximal 5 s, ein Durchbrennen zeigt, bei Beaufschlagung mit einer typischen aus einer Batteriezelle austretenden Flamme Durchbrennzeiten von wenigen Sekunden, insbesondere von maximal 4 s, insbesondere maximal 3 s, erreicht werden, so dass sich nach dem Auftreten der Flamme innerhalb weniger Sekunden eine Öffnung im Sicherheitswandabschnitt und damit im Batteriemodulgehäuse bildet, so dass die Energie der Flamme aus dem Batteriemodulgehäuse entweichen kann.

Das Batteriemodul weist mit dem Sicherheitswandabschnitt damit gleichsam eine Sollbruchstelle auf, an der sich durch die Einwirkung der Flamme spätestens nach wenigen Sekunden eine Öffnung gebildet hat, aus der die Flamme aus dem Batteriemodul entweichen kann. Durch das gezielte Abführen der Flamme kann insbesondere das Risiko für ein Übergreifen der Flamme auf benachbarte Batteriezellen bzw. für eine Beschädigung der benachbarten Batteriezellen durch übermäßige Erwärmung des Batteriemodulinnenraums und damit für eine Kettenreaktion von Fehlfunktionen der übrigen Batteriezellen reduziert werden.

Im Rahmen der vorliegenden Erfindung wurde insbesondere erkannt, dass ein Übergreifen der Flamme bzw. ein exzessives Aufheizen des Batteriemodulinnenraums zuverlässig verhindert werden kann, wenn der Sicherheitswandabschnitt die zuvor genannte maximale Durchbrennzeit im Nadelflammtest aufweist, so dass das Batteriemodulgehäuse spätestens einige Sekunden nach dem Auftreten der Flamme eine Öffnung im Bereich der beschädigten Batteriezelle aufweist. Gegenüber einer permanenten Öffnung im Batteriemodulgehäuse hat das Vorsehen eines Sicherheitswandabschnitts zudem den Vorteil, dass die Batteriezellen im Normalbetrieb, d.h. bei ordnungsgemäßer Funktion der Batteriezellen, weiterhin sicher vor äußeren Einwirkungen geschützt werden und eine Kühlung der Batteriezellen in einem geschlossenen Gehäuse ermöglicht wird.

Vorzugsweise können im Bereich mehrerer Aufnahmen für Batteriezellen entsprechende Sicherheitswandabschnitte vorgesehen sein, insbesondere im Bereich sämtlicher Aufnahmen. Zu diesem Zweck können beispielsweise eine Mehrzahl von Sicherheitsabschnitten oder ein oder mehrere zusammenhängende, größere Sicherheitswandabschnitte vorgesehen werden, die sich über mehrere Aufnahmen, insbesondere über sämtliche Aufnahmen des Batteriemodulgehäuses, erstrecken.

Die Materialeigenschaften und die Dicke des Sicherheitswandabschnitts sind vorzugsweise so beschaffen, dass der Sicherheitswandabschnitt bei Beaufschlagung mit einer Flamme, die eine Temperatur von mindestens 600 °C aufweist, nach maximal 5, vorzugsweise maximal 4, insbesondere maximal 3 Sekunden durchgebrannt ist, so dass sich im Batteriemodulgehäuse in diesem Bereich eine Öffnung bildet. Bei der angegebenen Temperatur der Flamme handelt es sich um die Temperatur der Flamme an der Oberfläche des Sicherheitswandabschnitts.

Unter der Öffnung, die sich im Batteriemodulgehäuse in diesem Bereich bildet, wird eine durchgehende Öffnung verstanden, die sich durch die gesamte Batteriemodulgehäusewand erstreckt, so dass die Energie einer Flamme, die aus der in einer zugehörigen Aufnahme angeordneten Batteriezelle austritt, aus dem Batteriemodulgehäuse herausgeführt wird.

Die im Sicherheitswandabschnitt entstehende Öffnung hat vorzugsweise einen Durchmesser von mindestens 5 mm, insbesondere mindestens 10 mm.

Bevorzugt beträgt der Durchmesser des Sicherheitswandabschnitts maximal 25 mm. Die Fläche des Sicherheitswandabschnitts beträgt bevorzugt maximal 800 mm² und/oder bevorzugt sind weniger als 20%, besonders bevorzugt weniger als 12 % der Gesamtfläche des Batteriemodulgehäuses als Sicherheitswandabschnitt ausgeführt.

Beim erfindungsgemäßen Batteriemodul weist das Batteriemodulgehäuse Batteriemodulinnenraum-seitig, d.h. auf der Innenseite des Batteriemodulgehäuses, Aufnahmen für eine vorgegebene Anzahl von Batteriezellen auf.

Batteriemodule, insbesondere Batteriemodule für Elektrofahrzeuge, weisen üblicherweise eine vorgegebene Anzahl von Batteriezellen auf, die in das Batteriemodul integriert werden. Typischerweise werden Batteriezellen in einem Batteriemodul in Reihe geschaltet, so dass sich die Ausgangsspannung des Batteriemoduls aus dem Produkt der Batteriezellenspannung und der Anzahl der in Reihe geschalteten Batteriezellen ergibt. Da Batteriemodule eine vorgegebene Ausgangsspannung aufzuweisen haben, wird damit auch die Anzahl der Batteriezellen im Batteriemodul vorgegeben. Entsprechend wird die Größe des Batteriemoduls so angepasst, dass es die vorgegebene Anzahl von Batteriezellen aufnehmen kann. Typische Batteriemodule weisen beispielsweise zwischen 8 und 36, insbesondere zwischen 12 und 36 Batteriezellen auf.

Eine Aufnahme für eine Batteriezelle im Batteriemodulinnenraum ist insbesondere so ausgebildet, dass die Aufnahme eine Batteriezelle aufnehmen kann, beispielsweise eine Batteriezelle vom Typ 18650. Hierbei handelt es sich um im Wesentlichen zylinderförmige Batteriezellen mit einem Durchmesser von ca. 18,6 mm und einer Höhe von ca. 65,2 mm. An diese Batteriezellen angepasste Aufnahmen können beispielsweise einen runden Aufnahmebereich aufweisen, dessen Durchmesser um ein Übermaß größer ist als der Batteriezellendurchmesser von 18,6 mm.

Neben Batteriezellen vom Typ 18650 kann das Batteriemodul auch für andere Typen von Batteriezellen ausgelegt sein, beispielsweise für Batteriezellen entsprechend einem der Typen 10180, 10280, 10440, 14250, 14500, 14560, 15270, 16340, 17340, 17500, 17670, 18350, 18500, 19670, 25500, 26650 oder 32600. Die Aufnahmen können hierzu beispielsweise einen Durchmesser aufweisen, der um ein Übermaß größer ist als der Batteriezellendurchmesser des entsprechenden Typs. Weiterhin kann das Batteriemodul auch für sogenannte Coffebag-Batteriezellen, d.h. flache rechteckige Batteriezellen, ausgelegt sein.

Vorzugsweise ist die Aufnahme so ausgestaltet, dass eine Batteriezelle form- und/oder kraftschlüssig in der Aufnahme fixierbar ist, um ein Verrutschen oder Verschieben der Batteriezelle im Normalbetrieb zu vermeiden. Weiterhin kann die Aufnahme Anschlussmittel aufweisen, um die Batteriezelle elektrisch zu beschalten, insbesondere mit weiteren Batteriezellen in Reihe zu schalten.

Bei einer Ausführungsform des Batteriemoduls ist der Sicherheitswandabschnitt in einem zur Aufnahme der Unterseite einer Batteriezelle ausgebildeten Bereich der Aufnahme angeordnet.

Sollbruchstellen von Batteriezellen, insbesondere von Lithiumionenakkus wie beispielsweise vom Typ 18650, sind häufig an der Unterseite der Batteriezelle angeordnet, so dass im Schadensfall eine Flamme gezielt aus der Batteriezellenunterseite austritt. Durch die Anordnung des Sicherheitswandabschnitts in einem zur Aufnahme der Unterseite einer Batteriezelle ausgebildeten Bereich der Aufnahme wird die Positionierung des Sicherheitswandabschnitts an diese Arten von Batteriezellen angepasst, so dass eine aus der Batteriezelle austretende Flamme direkt auf den Sicherheitswandabschnitt auftrifft und diesen dann in der vorgegebenen Zeit durchbrennt.

Der zur Aufnahme der Unterseite einer Batteriezelle ausgebildete Bereich der Aufnahme weist vorzugsweise eine Vertiefung oder eine Umrandung mit vorzugsweise im Wesentlichen kreisförmigem Querschnitt zur Aufnahme der Batteriezellen, insbesondere zur Aufnahme häufig verwendeter zylindrischer Batteriezellen, auf.

Bei einer weiteren Ausführungsform des Batteriemoduls ist der Sicherheitswandabschnitt in einem zur Aufnahme eines Kantenbereichs einer Batteriezelle ausgebildeten Bereich der Aufnahme angeordnet. Diese Ausführungsform ist insbesondere für sogenannte Coffebag-Batteriezellen geeignet, welche typischerweise eine Sollbruchstelle zum Austritt einer Flamme im Schadensfall an ihrem Kantenbereich aufweisen.

Bei einer Ausführungsform des Batteriemoduls umfasst mindestens der Sicherheitswandabschnitt, vorzugsweise das gesamte Batteriemodulgehäuse oder im Wesentlichen das gesamte Batteriemodulgehäuse, einen flammgeschützten Werkstoff, insbesondere einen flammgeschützten Kunststoff.

Unter einem flammgeschützten Werkstoff, insbesondere einem flammgeschützten Kunststoff, wird vorliegend ein Werkstoff verstanden, der zwar schmelzen und gegebenenfalls auch brennen kann, solange eine Flamme auf ihn einwirkt, der jedoch nach dem Erlöschen der Flamme nicht weiter brennt. Durch die Verwendung eines solchen Werkstoffs kann verhindert werden, dass der Sicherheitsabschnitt bzw. das Batteriemodulgehäuse nach dem Erlöschen einer aus einer Batteriezelle austretenden Flamme weiter brennt. Damit kann die Ausbreitung eines Feuers verhindert werden. Insbesondere wird unter einem flammgeschützten Werkstoff vorliegend ein Werkstoff verstanden, der die Voraussetzungen des Tests UL 94-V (Stab) erfüllt. Bei dem Test UL 94-V (Stab) handelt es sich um einen Test der Underwriters Laboratories aus der Vorschrift UL 94 ("Tests for Flammability of Plastic Materials for Parts in Devices and Applications"). Vorzugsweise erfüllt der flammgeschützte Werkstoff die Klassifizierung V-2, vorzugsweise die Klassifizierung V-1, insbesondere die Klassifizierung V-0 im Test UL 94-V (Stab).

Bevorzugt erfüllt der vom Sicherheitswandabschnitt umfasste, insbesondere flammgeschützte Werkstoff die Klassifizierung 5VB beim Test UL 94-5VB (Platte) unter Bildung eines Brandlochs.

Die zuvor genannten UL-Tests ergeben sich entsprechend auch aus DIN EN 60695-11-10 bzw. DIN EN 60695-11-20.

Erfindungsgemäß umfaßt das gesamte Batteriemodulgehäuse ein Polycarbonatmaterial.

Polycarbonatmaterialien zeichnen sich durch eine gute Elastizität und eine hohe Zähigkeit aus, insbesondere auch bei niedrigen Temperaturen von bis zu -30 °C, die beim Einsatz in Elektrofahrzeugen durchaus auch auftreten können. Weiterhin können Polycarbonatmaterialien mit einem guten Flammenschutz versehen werden.

Als Polycarbonatmaterialien kommen vorliegend insbesondere Polycarbonatzusammensetzungen enthaltend
A) 70,0 bis 90,0 Gew.-Teile, bevorzugt 75,0 bis 88,0 Gew.-Teile, besonders bevorzugt 77,0 bis 85,0 Gew.-Teile (bezogen auf die Summe der Gew.-Teile der Komponenten A + B + C) lineares und/oder verzweigtes aromatisches Polycarbonat und/oder aromatisches Polyestercarbonat,
B) 6,0 bis 15,0 Gew.-Teile, bevorzugt 7,0 bis 13,0 Gew.-Teile, besonders bevorzugt 9,0 bis 11,0 Gew.-Teile (bezogen auf die Summe der Gew.-Teile der Komponenten A + B + C) mindestens eines Pfropfpolymerisats mit
   B.1) 5 bis 40 Gew.-%, vorzugsweise 5 bis 30 Gew.-%, besonders bevorzugt 10 bis 20 Gew.-% (jeweils bezogen auf das Pfropfpolymerisat B) einer Hülle aus mindestens einem Vinylmonomeren und
   B.2) 95 bis 60 Gew.-%, vorzugsweise 95 bis 70 Gew.-%, besonders bevorzugt 80 bis 90 Gew.-% (jeweils bezogen auf das Pfropfpolymerisat B) einer oder mehrerer Pfropfgrundlagen aus Silikon-Acrylat-Kompositkautschuk,
C) 2,0 bis 15,0 Gew.-Teile, bevorzugt 3,0 bis 13,0 Gew.-Teile, besonders bevorzugt 4,0 bis 11,0 Gew.-Teile (bezogen auf die Summe der Gew.-Teile der Komponenten A + B + C) Phosphorverbindungen, ausgewählt aus den Gruppen der Mono- und oligomeren Phosphor- und Phosphonsäureester, Phosphonatamine, Phosphazene und Phosphinate, wobei auch Mischungen von mehreren Komponenten, ausgewählt aus einer oder verschiedenen dieser Gruppen als Flammschutzmittel zum Einsatz kommen können,
D) 0 bis 3,0 Gew.-Teile, bevorzugt 0,01 bis 1,00 Gew.-Teile, besonders bevorzugt 0,1 bis 0,6 Gew.-Teile (bezogen auf die Summe der Gew.-Teile der Komponenten A + B + C) Antitropfmittel,
E) 0 - 3,0 Gew.-Teile, bevorzugt 0 bis 1,0 Gew.-Teile (bezogen auf die Summe der Gew.-Teile der Komponenten A + B + C) thermoplastisches Vinyl(Co)Polymerisat (E.1) und/oder Polyalkylenterephthalat (E.2), besonders bevorzugt ist die Zusammensetzung frei von thermoplastischen Vinyl(Co)Polymerisaten (E.1) und/oder Polyalkylenterephthalaten (E.2), und
F) 0 bis 20,0 Gew.-Teile, bevorzugt 0,1 bis 10,0 Gew.-Teile, besonders bevorzugt 0,2 bis 5,0 Gew.-Teile (bezogen auf die Summe der Gew.-Teile der Komponenten A + B + C) weitere Zusatzstoffe,
wobei die Zusammensetzungen vorzugsweise frei sind von kautschukfreiem Polyalkyl(alkyl)acrylat und wobei alle Gewichtsteilangaben in der vorliegenden Anmeldung so normiert sind, dass die Summe der Gewichtsteile der Komponenten A + B + C in der Zusammensetzung 100 ergeben, in Frage.

Als Polycarbonatmaterialien kommen vorliegend weiterhin insbesondere Polycarbonatzusammensetzungen enthaltend
A) 70,0 bis 90,0 Gew.-Teile, bevorzugt 75,0 bis 88,0 Gew.-Teile, besonders bevorzugt 77,0 bis 85,0 Gew.-Teile (bezogen auf die Summe der Gew.-Teile der Komponenten A + B* + C) lineares und/oder verzweigtes aromatisches Polycarbonat und/oder aromatisches Polyestercarbonat,
B*) 6,0 bis 15,0 Gew.-Teile, bevorzugt 7,0 bis 13,0 Gew.-Teile, besonders bevorzugt 9,0 bis 11,0 Gew.-Teile (bezogen auf die Summe der Gew.-Teile der Komponenten A + B* + C) mindestens eines Pfropfpolymerisats mit
   B*.1) 5 bis 95, vorzugsweise 30 bis 80 Gew.-Teile, einer Mischung aus
   B*.1.1) 50 bis 95 Gew.-Teilen Styrol, α-Methylstyrol, methylkernsubstituiertem Styrol, C₁- bis C₈-Alkylmethacrylat, insbesondere Methylmethacrylat, C₁- bis C₈-Alkylacrylat, insbesondere Methylacrylat, oder Mischungen dieser Verbindungen und
   B*.1.2) 5 bis 50 Gew.-Teilen Acrylnitril, Methacrylnitril, C₁- bis C₈-Alkylmethacrylaten, insbesondere Methylmethacrylat, C₁- bis C₈-Alkylacrylat, insbesondere Methylacrylat, Maleinsäureanhydrid, C₁- bis C₄-Alkyl- bzw. -Phenyl-N-substituierten Maleinimiden oder Mischungen dieser Verbindungen auf
   B*.2) 5 bis 95, vorzugsweise 20 bis 70 Gew.-Teilen, einer kautschukhaltigen Pfropfgrundlage auf Butadien- oder Acrylatbasis,
C) 2,0 bis 15,0 Gew.-Teile, bevorzugt 3,0 bis 13,0 Gew.-Teile, besonders bevorzugt 4,0 bis 11,0 Gew.-Teile (bezogen auf die Summe der Gew.-Teile der Komponenten A + B* + C) Phosphorverbindungen, ausgewählt aus den Gruppen der Mono- und oligomeren Phosphor- und Phosphonsäureester, Phosphonatamine, Phosphazene und Phosphinate, wobei auch Mischungen von mehreren Komponenten, ausgewählt aus einer oder verschiedenen dieser Gruppen, als Flammschutzmittel zum Einsatz kommen können,
D) 0 bis 3,0 Gew.-Teile, bevorzugt 0,01 bis 1,00 Gew.-Teile, besonders bevorzugt 0,1 bis 0,6 Gew.-Teile (bezogen auf die Summe der Gew.-Teile der Komponenten A + B* + C) Antitropfmittel,
E) 0 - 3,0 Gew.-Teile, bevorzugt 0 bis 1,0 Gew.-Teile (bezogen auf die Summe der Gew.-Teile der Komponenten A + B* + C) thermoplastisches Vinyl(Co)Polymerisat (E.1) und/oder Polyalkylenterephthalat (E.2), besonders bevorzugt ist die Zusammensetzung frei von thermoplastischen Vinyl(Co)Polymerisaten (E.1) und/oder Polyalkylenterephthalaten (E.2), und
F) 0 bis 20,0 Gew.-Teile, bevorzugt 0,1 bis 10,0 Gew.-Teile, besonders bevorzugt 0,2 bis 5,0 Gew.-Teile (bezogen auf die Summe der Gew.-Teile der Komponenten A + B* + C) weitere Zusatzstoffe,
wobei die Zusammensetzungen vorzugsweise frei sind von kautschukfreiem Polyalkyl(alkyl)acrylat und wobei alle Gewichtsteilangaben in der vorliegenden Anmeldung so normiert sind, dass die Summe der Gewichtsteile der Komponenten A + B* + C in der Zusammensetzung 100 ergeben, in Frage.

Die einzelnen Komponenten der zuvor beschriebenen Polycarbonatzusammensetzungen werden im Folgenden näher erläutert:

### Komponente A

Geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 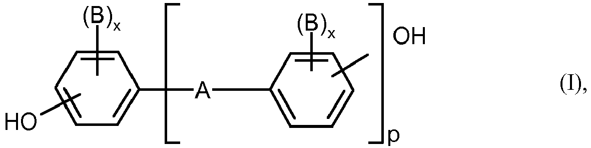 wobei
A eine Einfachbindung, C₁- bis C₅-Alkylen, C₂- bis C₅-Alkyliden, C₅- bis C₆-Cycloalkyliden, -O-, -SO-, -CO-, -S-, -SO₂-, C₆- bis C₁₂-Arylen, an das weitere aromatische gegebenenfalls Heteroatome enthaltende Ringe kondensiert sein können,
   oder ein Rest der Formel (II) oder (III) 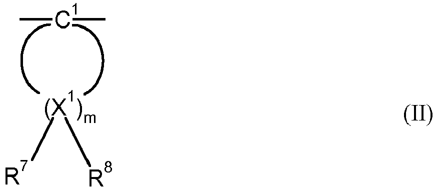 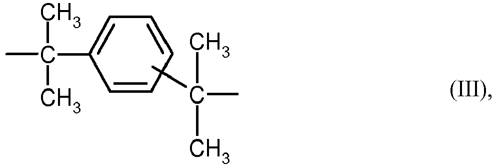
B jeweils C₁- bis C₁₂-Alkyl, vorzugsweise Methyl, Halogen, vorzugsweise Chlor und/oder Brom,
x jeweils unabhängig voneinander 0, 1 oder 2,
p 1 oder 0 sind, und
   R⁷ und R⁸ für jedes X¹ individuell wählbar, unabhängig voneinander Wasserstoff oder C₁- bis C₆-Alkyl, vorzugsweise Wasserstoff, Methyl oder Ethyl,
   X¹ Kohlenstoff und
   m eine ganze Zahl von 4 bis 7, bevorzugt 4 oder 5 bedeuten, mit der Maßgabe, dass an mindestens einem Atom X¹, R⁷ und R⁸ gleichzeitig Alkyl sind.

Bevorzugte Diphenole sind Hydrochinon, Resorcin, Dihydroxydiphenole, Bis-(hydroxyphenyl)-C₁-bis -C₅-alkane, Bis-(hydroxyphenyl)-C₅- bis -C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung der Copolycarbonate gemäß Komponente A können auch 1,0 bis 25,0 Gew.-%, vorzugsweise 2,5 bis 25,0 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxan-haltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁- bis C₂₂-Alkylgruppen oder durch Halogenatome substituiert sein können, sowie aliphatische C₂- bis C₂₂-Monocarbonsäurechloride in Betracht.

Die Menge an Kettenabbrechern beträgt jeweils 0,1 bis 10,0 Mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten. Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,00 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,40, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Pfropfpolymerisate B werden durch radikalische Polymerisation, z.B. durch Emulsions-, Suspensions-, Lösungs- oder Massepolymerisation, vorzugsweise durch Emulsionspolymerisation, hergestellt.

Geeignete Monomere B.1 sind Vinylmonomere wie Vinylaromaten und/oder kernsubstituierte Vinylaromaten (wie Styrol, α-Methylstyrol, p-Methylstyrol, p-Chlorstyrol), Methacrylsäure-(C₁-bis C₈)-Alkylester (wie Methylmethacrylat, Ethylmethacrylat, 2-Ethylhexylmethacrylat, Allylmethacrylat), Acrylsäure-(C₁- bis C₈)-Alkylester (wie Methylacrylat, Ethylacrylat, n-Butylacrylat, t-Butylacrylat), organische Säuren (wie Acrylsäure, Methacrylsäure) und/oder Vinylcyanide (wie Acrylnitril und Methacrylnitril) und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, α-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im Allgemeinen eine mittlere Teilchengröße (d₅₀-Wert) von 0,05 bis 10 µm, vorzugsweise 0,06 bis 5 µm besonders bevorzugt 0,08 bis 1 µm.

Die Glasübergangstemperatur wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlage B.2 wird Silikon-Acrylat-Kompositkautschuk eingesetzt. Diese Silikon-Acrylat-Kompositkautschuke sind vorzugsweise Komposit-Kautschuke mit pfropfaktiven Stellen enthaltend 10 - 90 Gew.-%, vorzugsweise 30 - 85 Gew.-% Silikonkautschuk-Anteil und 90 bis 10 Gew.-%, vorzugsweise 70 - 15 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigheit der fertigen Harzzusammensetzung nachteilig beeinflußt.

Silikon-Acrylat-Komposit-Kautschuke sind bekannt und beispielsweise beschrieben in US 5,807,914, EP 430134 und US 4888388.

Geeignete Silikonkautschuk-Komponenten B.2.1 der Silikon-Acrylat-Kompositkautschuke gemäß B.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40,0 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R⁹)-COO-(CH₂)ₚ-SiR¹⁰ₙO_{(3-n)/2} (V-1)

CH₂=CH-SiR¹⁰ₙO_{(3-n)/2} (V-2)

oder

HS-(CH₂)ₚ-SiR¹⁰ₙO_{(3-n)/2} (V-3),

wobei
- R⁹: für Wasserstoff oder Methyl stehen,
- R¹⁰: für C₁- bis C₄-Alkyl, vorzugsweise Methyl, Ethyl oder Propyl, oder Phenyl,
- n: 0, 1 oder 2 und
- p: eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, y- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silan oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wäßrigen Natriumhydroxid-, Kaliumhydroxid- oder Natriumcarbonat-Lösung.

Geeignete Polyalkyl(meth)acrylatkautschuk-Komponenten B.2.2 der Silikon-Acrylat-Kompositkautschuke gemäß B.2 können hergestellt werden aus Methacrylsäurealkylestern und/oder Acrylsäurealkylestern, einem Vernetzungsmittel (IV) und einem Pfropfmittel (V). Hierbei sind beispielhafte und bevorzugte Methacrylsäurealkylester und/oder Acrylsäurealkylester die C₁-bis -C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-bis -C₈-alkylester, wie Chlorethylacrylat sowie Mischungen dieser Monomeren. Besonders bevorzugt ist n-Butylacrylat.

Als Vernetzungsmittel (IV) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (V) sind Allylmethacrylat, Triallylcyanurat, Triallylisocyanurat oder Mischungen hieraus. Allylmethacrylat kann auch als Vernetzungsmittel (IV) eingesetzt werden. Die Pfropfmittel können alleine oder in Gemischen aus mindestens zwei Pfropfmitteln verwendet werden.

Die Menge an Vernetzungsmittel (IV) und Pfropfmittel (V) beträgt 0,1 bis 20 Gew.-%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (IV) und dem Pfropfmittel (V) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems, hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen lässt.

Zur Herstellung der als Komponente B) genannten Silikon-Acrylat-Komposit-Pfropfkautschuke B werden die Monomere B.1 auf die Kautschuk-Grundlage B.2 aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die als Komponente B) genannten Methacrylsäurealkylester- und Acrylsäurealkylester-Pfropfkautschuke sind kommerziell erhältlich. Beispielhaft seien genannt: Metablen® SX 005, Metablen® S-2030 und Metablen® SRK 200 der Mitsubishi Rayon Co. Ltd.

### Komponente B*

Die Pfropfpolymerisate B* werden durch radikalische Polymerisation, z.B. durch Emulsions-, Suspensions-, Lösungs- oder Massepolymerisation, vorzugsweise durch Emulsionspolymerisation, hergestellt.

Die Pfropfpolymerisate B* umfassen z.B. Pfropfpolymerisate mit kautschukelastischen Eigenschaften, die im wesentlichen aus mindestens 2 der folgenden Monomere erhältlich sind: Chloropren, Butadien-1,3, Isopren, Styrol, Acrylnitril, Ethylen, Propylen, Vinylacetat und (Meth-)acrylsäureester mit 1 bis 18 C-Atomen in der Alkoholkomponente, also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate B* sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B* umfassen Pfropfpolymerisate aus:
B*.1) 5 bis 95, vorzugsweise 30 bis 80 Gew.-Teile, einer Mischung aus
B*.1.1) 50 bis 95 Gew.-Teilen Styrol, α-Methylstyrol, methylkernsubstituiertem Styrol, C₁-bis C₈-Alkylmethacrylat, insbesondere Methylmethacrylat, C₁- bis C₈-Alkylacrylat, insbesondere Methylacrylat, oder Mischungen dieser Verbindungen und
B*.1.2) 5 bis 50 Gew.-Teilen Acrylnitril, Methacrylnitril C₁- bis C₈-Alkylmethacrylaten, insbesondere Methylmethacrylat, C₁- bis C₈-Alkylacrylat, insbesondere Methylacrylat, Maleinsäureanhydrid, C₁- bis C₄-alkyl- bzw. -phenyl-N-substituierte Maleinimide oder Mischungen dieser Verbindungen auf
B*.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Besonders bevorzugt ist eine Pfropfgrundlage auf Basis eines Polybutadienkautschuks.

Die Glasübergangstemperatur wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Bevorzugte Pfropfpolymerisate B* sind z.B. mit Styrol und/oder Acrylnitril und/oder (Meth-)Acrylsäurealkylestern gepfropfte Polybutadiene, Butadien/Styrol-Copolymerisate und Acrylatkautschuke, d.h. Copolymerisate der in der DE-OS 1 694 173 (= US-PS 3 564 077) beschriebenen Art, mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B* sind Pfropfpolymerisate, die durch Pfropfreaktion von
I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf
II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage,
erhältlich sind.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser d₅₀ des Pfropfpolymerisats B* 0,05 bis 2, vorzugsweise 0,1 bis 0,6 µm.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden unter Pfropfpolymerisaten B* auch solche Produkte verstanden, die durch Polymerisation der Pfropfmonomeren in Gegenwart der Pfropfgrundlage gewonnen werden.

Die Formmassen haben vorzugsweise einen Gesamtanteil aus den aus Pfropfmonomeren gebildeten oder frei zugesetztem, nicht chemisch an die Pfropfgrundlage gebundenen Polymerisats, z.B. freies SAN, von weniger als 2,0 Gew.-%, vorzugsweise weniger als 1,5 Gew.-% (d.h. von 0,0 - 2,0 Gew.%, vorzugsweise 0,0 - 1,5 Gew.-%), bezogen auf die Gesamtformmasse. Bei einer Erhöhung dieses Anteils verschlechtern sich die Eigenschaften drastisch.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B* sind z.B. auch Pfropfpolymerisate aus
(a) 20 bis 90 Gew.-%, bezogen auf B*, Acrylatkautschuk als Pfropfgrundlage und
(b) 10 bis 80 Gew.-%, bezogen auf B*, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschukt hat eine Glasübergangstemperatur von kleiner als -20°C, vorzugsweise kleiner -30°C.

Die Acrylatkautschuke (a) der Polymerisate B* sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören C₁- bis C₈-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 500, insbesondere 0,05 bis 2,00 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

### Komponente C

Die Zusammensetzungen enthalten weiterhin Flammschutzmittel, wobei diese vorzugsweise ausgewählt sind aus der Gruppe, die die phosphorhaltigen Flammschutzmittel und halogenierten Flammschutzmittel umfasst.

Besonders bevorzugt werden phosphorhaltige Flammschutzmittel eingesetzt, wobei diese phosphorhaltigen Flammschutzmittel ausgewählt sind aus den Gruppen der Mono- und oligomeren Phosphor- und Phosphonsäureester, Phosphonatamine, Phosphazene und Phosphinsäuresalzen, wobei auch Mischungen von mehreren Komponenten, ausgewählt aus einer oder verschiedenen dieser Gruppen, als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VI) 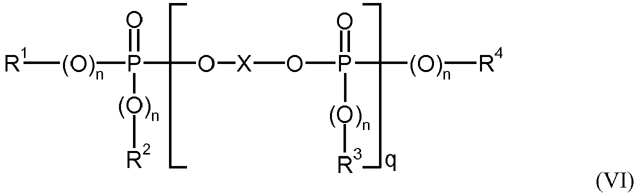 worin
R¹, R², R³ und R⁴ unabhängig voneinander jeweils gegebenenfalls halogeniertes C₁- bis C₈-Alkyl, jeweils gegebenenfalls durch Alkyl, vorzugsweise C₁- bis C₄-Alkyl, und/oder Halogen, vorzugsweise Chlor, Brom, substituiertes C₅- bis C₆-Cycloalkyl, C₆- bis C₂₀-Aryl oder C₇- bis C₁₂-Aralkyl,
n unabhängig voneinander 0 oder 1,
q 0 bis 30 und
X einen ein- oder mehrkernigen aromatischen Rest mit 6 bis 30 C-Atomen oder einen linearen oder verzweigten aliphatischen Rest mit 2 bis 30 C-Atomen, der OH-substituiert sein und bis zu acht Etherbindungen enthalten kann, bedeuten.

Bevorzugt stehen R¹, R², R³ und R⁴ unabhängig voneinander für C₁- bis C₄-Alkyl, Phenyl, Naphthyl oder Phenyl-C₁-bis C₄-alkyl. Die aromatischen Gruppen R¹, R², R³ und R⁴ können ihrerseits mit Halogen- und/oder Alkylgruppen, vorzugsweise Chlor, Brom und/oder C₁- bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (VI) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (VI) kann unabhängig voneinander 0 oder 1 sein, vorzugsweise ist n gleich 1.
q (auch in Formel VII) steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für 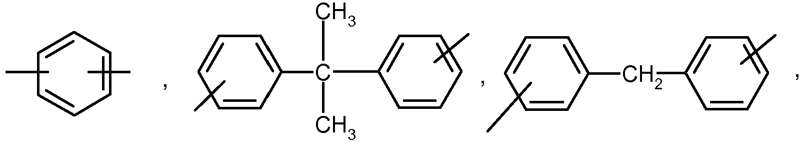 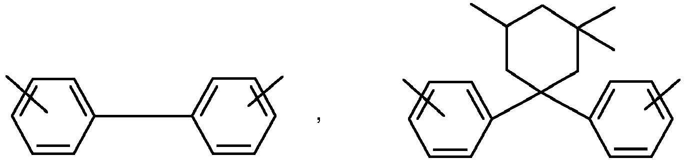 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Phosphorverbindungen der Formel (VI) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (VI), die sich vom Bisphenol A ableiten, ist insbesondere bevorzugt.

Höchst bevorzugt als Komponente C ist Bisphenol-A basierendes Oligophosphat gemäß Formel (VIa)

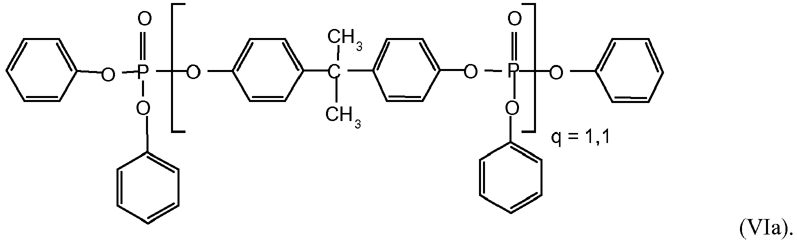

In einer alternativen bevorzugten Ausführungsform ist Komponente C Resorcinol-basierendes Oligophosphat gemäß Formel (VIb)

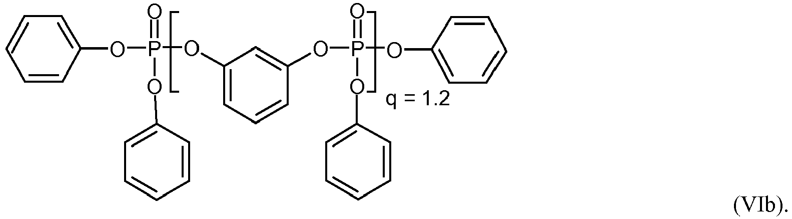

Die Phosphorverbindungen gemäß Komponente C sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als Komponente C können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Weitere bevorzugte Flammschutzmittel sind Salze einer Phosphinsäure mit beliebigen Metallkationen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe, vorzugsweise Al³⁺) und/oder der 2., 7. oder 8. Nebengruppe (vorzugsweise Zn²⁺, Mn²⁺, Fe²⁺, Fe³⁺) des Periodensystems.

Vorzugsweise wird ein Salz oder eine Mischung von Salzen einer Phosphinsäure der Formel (IX) eingesetzt, 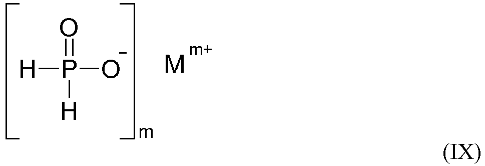 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IX)
für m = 1 die Metallkationen M⁺ = Li⁺, Na⁺, K⁺,
für m = 2 die Metallkationen M²⁺ = Mg²⁺, Ca²⁺,Sr²⁺, Ba²⁺ und
für m = 3 das Metallkation M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente C) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden.

### Komponente D

Als Antitropfmittel, können die Zusammensetzungen vorzugsweise fluorierte Polyolefine D enthalten. Fluorierte Polyolefine sind allgemein bekannt (vgl. z.B. EP-A 640 655). Ein handelsübliches Produkt ist beispielsweise Teflon^{®} 30 N von der Firma DuPont.

Die fluorierten Polyolefine können auch in Form einer koagulierten Mischung von Emulsionen der fluorierten Polyolefine mit Emulsionen der Pfropfpolymerisate B) bzw. B*) oder einer Emulsion eines Copolymerisats E.1) vorzugsweise auf Styrol/Acrylnitril-Basis oder Polymethylmethacrylat-Basis eingesetzt werden, wobei das fluorierte Polyolefin als Emulsion mit einer Emulsion des Pfropfpolymerisats bzw. (Co)polymerisats gemischt und anschließend koaguliert wird.

Weiterhin können die fluorierten Polyolefine als Präcompound mit dem Pfropfpolymerisat B) oder einem Copolymerisat E.1) auf vorzugsweise Styrol/Acrylnitril-Basis oder Polymethylmethacrylat-Basis eingesetzt werden. Die fluorierten Polyolefine werden als Pulver mit einem Pulver oder Granulat des Pfropfpolymerisats bzw. Copolymerisats vermischt und in der Schmelze im Allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Polymethylmethacrylat und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 bis 95 Gew.-%, vorzugsweise 7 bis 60 Gew.-%.

### Komponente E

Die Komponente E umfasst ein oder mehrere thermoplastische Vinyl(Co)Polymerisate E.1 und/oder Polyalkylenterephthalate E.2.

Geeignet sind als Vinyl(Co)Polymerisate F.1 Polymerisate von mindestens einem Monomeren aus der Gruppe der Vinylaromaten, Vinylcyanide (ungesättigte Nitrile), ungesättigte Carbonsäuren sowie Derivate (wie Ester, Anhydride und Imide) ungesättigter Carbonsäuren. Insbesondere geeignet sind (Co)Polymerisate aus
E.1.1 50 bis 99, vorzugsweise 60 bis 80 Gew.-Teilen Vinylaromaten und/oder kernsubstituierten Vinylaromaten (wie Styrol, α-Methylstyrol, p-Methylstyrol, p-Chlorstyrol), und
E.1.2 1 bis 50, vorzugsweise 20 bis 40 Gew.-Teilen Vinylcyaniden (ungesättigte Nitrile, wie Acrylnitril und Methacrylnitril) und/oder ungesättigte Carbonsäuren (wie Acrylsäure und Maleinsäure) und/oder Derivaten (wie Anhydride und Imide) ungesättigter Carbonsäuren (beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol.

Die Polyalkylenterephthalate der Komponente E.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte. Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im Allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Weitere Zusatzstoffe F

Die Formmassen können wenigstens ein weiteres der üblichen Additive, wie z.B. Gleit- und Entformungsmittel, Nukleiermittel, Antistatika, Stabilisatoren, Farbstoffe und Pigmente sowie Füll- und Verstärkungsstoffe enthalten.

Die Komponente F umfasst auch feinstteilige anorganische Verbindungen, die sich durch einen durchschnittlichen Teilchendurchmesser von kleiner oder gleich 200 nm, bevorzugt kleiner oder gleich 150 nm, insbesondere von 1 bis 100 nm auszeichnen. Geeignete feinstteilige anorganische Verbindungen bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element, ausgewählt aus Sauerstoff, Wasserstoff, Schwefel, Phosphor, Bor, Kohlenstoff, Stickstoff oder Silicium. Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate. Bevorzugt bestehen die feinstteiligen anorganischen Verbindungen aus Oxiden, Phosphaten, Hydroxiden, vorzugsweise aus TiO₂, SiO₂, SnO₂, ZnO, ZnS, Böhmit, ZrO₂, Al₂O₃, Aluminiumphosphaten, Eisenoxiden, ferner TiN, WC, AIO(OH), Fe₂O₃ Eisenoxiden, NaSO₄, Vanadianoxiden, Zinkborat, Silikaten wie Al-Silikaten, Mg-Silikaten, ein-, zwei-, dreidimensionale Silikaten und Talk. Mischungen und dotierte Verbindungen sind ebenfalls verwendbar. Des Weiteren können diese feinstteilige anorganische Verbindungen mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen. Besonders bevorzugt sind hydrathaltige Aluminiumoxide (z.B. Böhmit) oder TiO₂.

Teilchengröße und Teilchendurchmesser der anorganischen Partikel bedeutet den mittleren Teilchendurchmesser d₅₀, z.B. ermittelt durch Sedimentationsmessungen über die Absetzgeschwindigkeit der Partikel, beispielsweise in einem Sedigraph.

Die anorganischen Verbindungen können als Pulver, Pasten, Sole, Dispersionen oder Suspensionen vorliegen. Durch Ausfällen können aus Dispersionen, Solen oder Suspensionen Pulver erhalten werden.

Die anorganischen Verbindungen können nach üblichen Verfahren in die thermoplastischen Formmassen eingearbeitet werden, beispielsweise durch direktes Kneten oder Extrudieren von Formmassen und den feinstteiligen anorganischen Verbindungen. Bevorzugte Verfahren stellen die Herstellung eines Masterbatch, z.B. in Flammschutzadditiven und wenigstens einer Komponente der Formmassen in Monomeren oder Lösungsmitteln, oder die Cofällung von einer thermoplastischen Komponente und den feinstteiligen anorganischen Verbindungen, z.B. durch Cofällung einer wässrigen Emulsion und den feinstteiligen anorganischen Verbindungen dar, gegebenenfalls in Form von Dispersionen, Suspensionen, Pasten oder Solen der feinstteiligen anorganischen Materialien.

Die Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert. Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die thermoplastischen Zusammensetzungen und Formmassen eignen sich aufgrund ihrer ausgezeichneten Balance aus hoher Schlagzähigkeit bei tiefen Temperaturen, guter Flammwidrigkeit bei dünnen Wandstärken und einer exzellenten chemischen Beständigkeit zur Herstellung von Batteriemodulgehäusen oder Batteriepackgehäusen oder Teilen davon.

Bei einer Ausführungsform ist Komponente C ausgewählt aus Phosphorverbindungen gemäß Formel (VII), 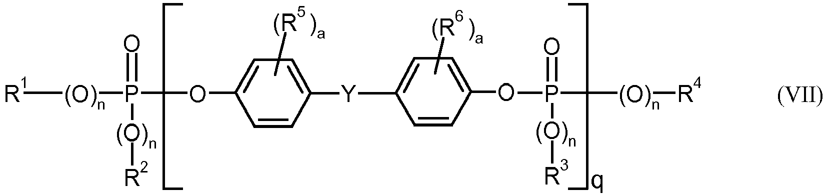 worin
R¹, R², R³ und R⁴, unabhängig voneinander gegebenenfalls durch Halogen substituiertes C₁- bis C₈-Alkyl, jeweils gegebenenfalls durch Halogen und/oder Alkyl substituiertes C₅- bis C₆-Cycloalkyl, C₆- bis C₁₀-Aryl oder C₇- bis C₁₂-Aralkyl,
n unabhängig voneinander 0 oder 1,
a unabhängig voneinander 0, 1, 2, 3 oder 4,
q 0 bis 30
R⁵ und R⁶ unabhängig voneinander C₁- bis C₄-Alkyl, vorzugsweise Methyl, oder Halogen, vorzugsweise Chlor und/oder Brom, und
Y C₁- bis C₇-Alkyliden, C₁- bis C₇-Alkylen, C₅- bis C₁₂-Cycloalkylen, C₅- bis C₁₂-Cycloalkyliden, -O-, -S-, -SO-, -SO₂- oder -CO- bedeuten,

Bei einer weiteren Ausführungsform, bei der die Polycarbonatzusammensetzung die Komponenten A + B + C und optional die Komponenten D, E und/oder F enthält, beträgt der Anteil der Komponente B 9,0 bis 11,0 Gew.-Teile (bezogen auf die Summe der Komponenten A + B + C). Bei einer weiteren Ausführungsform, bei der die Polycarbonatzusammensetzung die Komponenten A + B* + C und optional die Komponenten D, E und/oder F enthält, beträgt der Anteil der Komponente B* 9,0 bis 11,0 Gew.-Teile (bezogen auf die Summe der Komponenten A + B* + C). Bei einer weiteren Ausführungsform beträgt der Anteil der Komponente C 4,0 bis 11,0 Gew.-Teile (bezogen auf die Summe der Komponenten A + B + C bzw. A + B* + C).

Bei einer weiteren Ausführungsform enthält die Polycarbonatzusammensetzung als Komponente C eine Mischung aus einem Monophosphat und einem Oligophosphat gemäß Formel (VII), wobei der Durchschnittswert von q 1,06 bis 1,15 ist.

Bei einer weiteren Ausführungsform beträgt der Anteil der Komponente D 0,1 bis 0,6 Gew.-Teile (bezogen auf die Summe der Komponenten A + B + C bzw. A + B* + C).

Bei einer weitere Ausführungsform enthält die Polycarbonatzusammensetzung als Komponente F mindestens ein Additiv, ausgewählt aus der Gruppe bestehend aus Gleit- und Entformungsmittel, Nukleiermittel, Antistatika, Stabilisatoren, Farbstoffen, Pigmenten, Füllstoffen, Verstärkungsstoffen und feinstteiligen anorganischen Verbindungen, wobei die feinstteiligen anorganischen Verbindungen einen durchschnittlichen Teilchendurchmesser von kleiner oder gleich 200 nm aufweisen.

Neben bzw. anstelle von Polycarbonatmaterialien können die Batteriemodulgehäuse, insbesondere die Sicherheitswandabschnitte, auch andere geeignete Kunststoffe wie zum Beispiel flammgeschützte Duroplaste und Thermoplaste umfassen. Beispiele hierfür sind: Polyamid-6 (PA6), Nylon 6-6 (PA66), Polybutylenterephthalat (PBT), PBT-Mischungen, Polypropylen (PP), Acrylnitril-Butadien-Styrol (ABS) oder Mischungen davon, vorzugsweise jeweils unter Zugabe von Flammschutzmitteln.

Erfindungsgemäß weist der Sicherheitswandabschnitt eine Dicke von 0,5 mm bis 3 mm, vorzugsweise von 0,8 mm bis 2 mm, insbesondere von 1 mm bis 2 mm, auf. Versuche haben gezeigt, dass die notwendigen Durchbrennzeiten besonders mit solch dünnen Wanddicken erreichbar sind. Polycarbonatmaterialien aufweisende Sicherheitswandabschnitte weisen bevorzugt insbesondere eine Dicke im Bereich von 0,8 mm bis 2 mm auf.

Erfindungsgemäß weist das sonstige Batteriemodulgehäuse, also das Gehäuse in anderen Bereichen als im Bereich des Sicherheitswandabschnitts, eine größere Wanddicke als der Sicherheitswandabschnitt auf. Bevorzugt beträgt die Wanddicke des sonstigen Batteriemodulgehäuses in diesem Fall 3 mm bis 5 mm.

Bei einer weiteren Ausführungsform des Batteriemoduls ist das Batteriemodulgehäuse mindestens im Bereich des Sicherheitswandabschnitts, vorzugsweise auf der jeweiligen gesamten Seite des Batteriemodulgehäuses oder im Wesentlichen auf der jeweiligen gesamten Seite des Batteriemodulgehäuses verrippt.

Durch die Verrippung kann bei gleichbleibender Wanddicke eine größere Stabilität bzw. eine gleichbleibende Stabilität bei geringerer Wanddicke des Sicherheitswandabschnitts erreicht werden. Vorzugsweise kann die gesamte oder im Wesentlichen die gesamte jeweilige Seite des Batteriemodulgehäuses verrippt werden, d.h. diejenige Seite, in der der Sicherheitswandabschnitt angeordnet ist. Bei einem Sicherheitswandabschnitt in der Unterseite des Batteriemodulgehäuses kann beispielsweise die gesamte Unterseite des Batteriemodulgehäuses verrippt sein.

Unter einer Verrippung eines Wandabschnitts wird verstanden, dass der Wandabschnitt rippenförmige Stege aufweist, durch die die strukturelle Stabilität des Wandabschnitts erhöht wird. Die Stege können beispielsweise aus demselben Material bestehen wie der Wandabschnitt und vorzugsweise einteilig mit diesem ausgebildet sein. Bei Herstellung des Batteriemodulgehäuses oder Teilen davon im Spritzguss können die Stege beispielsweise in der Spritzgussform berücksichtigt und so direkt mitgespritzt werden. Die Verrippung kann eine Mehrzahl sich überkreuzender Rippen umfassen, wobei die Wandbereiche zwischen den einzelnen Rippen dann entsprechend dünner ausgestaltet werden können.

Bei einer weiteren Ausführungsform des Batteriemoduls weist das Batteriemodulgehäuse im Bereich des Sicherheitswandabschnitts eine mit einer Folie abgedeckte Öffnung auf. Zu diesem Zweck kann beispielsweise bei der Herstellung des Batteriemodulgehäuses im Bereich des Sicherheitswandabschnitts eine Öffnung vorgesehen werden, die anschließend mit einer Folie verschlossen wird. Die Folie kann mit dem die Öffnung umgebenden Material des Batteriemodulgehäuses beispielsweise verklebt, verschweißt oder auf andere Weise an diesem befestigt werden. Die Wanddicke im Sicherheitswandabschnitt entspricht dann der Foliendicke, welche beispielsweise im Bereich von 10 µm bis 500 µm liegen kann. Mit dieser Ausführungsform können damit besonders dünne Wanddicken im Sicherheitswandabschnitt erreicht werden. Für die Folie kommen insbesondere Folien aus Kunststoff in Betracht, beispielsweise aus einem der zuvor für das Batteriemodulgehäuse beschriebenen Kunststoffe.

Bei einer weiteren Ausführungsform des Batteriemoduls umfasst das Batteriemodul die vorgegebene Anzahl von Batteriezellen, wobei die einzelnen Batteriezellen in den Aufnahmen angeordnet sind. Bei N Aufnahmen umfasst das Batteriemodul demnach N Batteriezellen, wobei in jeder Aufnahme für eine Batteriezelle jeweils eine Batteriezelle angeordnet ist. Bei den Batteriezellen kann es sich insbesondere um Lithiumionenakkus handeln, beispielsweise vom Typ 18650 oder alternativ vom Typ 10180, 10280, 10440, 14250, 14500, 14560, 15270, 16340, 17340, 17500, 17670, 18350, 18500, 19670, 25500, 26650 oder 32600 oder vom Coffebag-Typ.

Bei einer weiteren Ausführungsform des Batteriemoduls weist mindestens eine der Batteriezellen eine Sollbruchstelle für den Austritt einer Flamme in eine Vorzugsrichtung auf, und die Batteriezelle ist so in einer Aufnahme angeordnet, dass die Vorzugsrichtung dem Sicherheitswandabschnitt der Aufnahme zugeordnet ist. Die Sollbruchstelle der Batteriezelle kann beispielsweise bei zylindrischen Batteriezellen im Bodenbereich und bei Coffebag-Batteriezellen im Kantenbereich der Batteriezelle angeordnet sein.

Auf diese Weise wird gewährleistet, dass eine im Schadensfall aus der Batteriezelle austretende Flamme auf den zugeordneten Sicherheitswandabschnitt trifft und so nach einer Zeit von wenigen Sekunden eine Öffnung in das Batteriemodulgehäuse brennt, so dass die Energie der Flamme aus dem Batteriemodul entweichen kann.

Bei einer weiteren Ausführungsform des Batteriemoduls ist die Unterseite einer Batteriezelle dem Sicherheitswandabschnitt einer Aufnahme zugeordnet. Typischerweise weisen Batteriezellen an ihrer Unterseite eine Sollbruchstelle auf. Bei der vorliegenden Ausführungsform ist das Batteriemodul an diese Lage der Sollbruchstellen angepasst.

Erfindungsgemäß besonders bevorzugt ist ein Batteriemodul
- mit einem Batteriemodulgehäuse,
- wobei das Batteriemodulgehäuse einen Batteriemodulinnenraum umschließt und
- wobei das Batteriemodulgehäuse Batteriemodulinnenraum-seitig Aufnahmen für eine vorgegebene Anzahl von Batteriezellen aufweist,
wobei
- das Batteriemodulgehäuse im Bereich mindestens einer Aufnahme einen Sicherheitswandabschnitt umfasst, dessen Materialeigenschaften und dessen Dicke derart beschaffen sind, dass der Sicherheitswandabschnitt im Nadelflammtest nach DIN EN ISO 11925-2 nach maximal 45 s ein Durchbrennen zeigt,
wobei
das vom Sicherheitswandabschnitt des Batteriemodulgehäuses und von den anderen Bereichen des Batteriemodulgehäuses umfasste Polycarbonatmaterial eine Polycarbonatzusammensetzung ist, welche die nachfolgenden Komponenten A + B + C oder A + B* + C sowie jeweils optional die Komponenten D, E und/oder F mit den jeweils angegebenen Anteilen enthält:
A) 70,0 bis 90,0 Gew.-Teile (bezogen auf die Summe der Gew.-Teile der Komponenten A + B + C bzw. A + B* + C) lineares und/ oder verzweigtes aromatisches Polycarbonat und/oder aromatisches Polyestercarbonat,
B) 6,0 bis 15,0 Gew.-Teile (bezogen auf die Summe der Gew.-Teile der Komponenten A + B + C) mindestens eines Pfropfpolymerisats mit
   B.1) 5 bis 40 Gew.-% (jeweils bezogen auf das Pfropfpolymerisat B) einer Hülle aus mindestens einem Vinylmonomeren und
   B.2) 95 bis 60 Gew.-% (jeweils bezogen auf das Pfropfpolymerisat B) einer oder mehrerer Pfropfgrundlagen aus Silikon-Acrylat-Kompositkautschuk,
B*) 6,0 bis 15,0 Gew.-Teile (bezogen auf die Summe der Gew.-Teile der Komponenten A + B* + C) mindestens eines Pfropfpolymerisats mit
   B*.1) 5 bis 95 einer Mischung aus
      B*.1.1) 50 bis 95 Gew.-Teilen Styrol, α-Methylstyrol, methylkernsubstituiertem Styrol, C₁- bis C₈-Alkylmethacrylat, C₁- bis C₈-Alkylacrylat oder Mischungen dieser Verbindungen und
      B*.1.2) 5 bis 50 Gew.-Teilen Acrylnitril, Methacrylnitril, C₁- bis C₈-Alkylmethacrylaten, C₁- bis C₈-Alkylacrylat, Maleinsäureanhydrid, C₁- bis C₄-alkyl- bzw. -phenyl-N-substituierte Maleinimide oder Mischungen dieser Verbindungen auf
   B*.2) 5 bis 95 Gew.-Teilen einer kautschukhaltigen Pfropfgrundlage auf Butadien- oder Acrylatbasis,
C) 2,0 bis 15,0 Gew.-Teile (bezogen auf die Summe der Gew.-Teile der Komponenten A + B + C bzw. A + B* + C) Phosphorverbindungen, ausgewählt aus den Gruppen der Mono- und oligomeren Phosphor- und Phosphonsäureester, Phosphonatamine, Phosphazene und Phosphinate sowie Mischungen dieser Verbindungen,
D) 0 bis 3,0 Gew.-Teile (bezogen auf die Summe der Gew.-Teile der Komponenten A + B + C bzw. A + B* + C) Antitropfmittel,
E) 0 - 3,0 Gew.-Teile (bezogen auf die Summe der Gew.-Teile der Komponenten A + B + C bzw. A + B* + C) thermoplastische Vinyl(Co)Polymerisat (E.1) und/oder Polyalkylenterephthalat (E.2), und
F) 0 bis 20,0 Gew.-Teile (bezogen auf die Summe der Gew.-Teile der Komponenten A + B + C bzw. A + B* + C) weitere Zusatzstoffe,
wobei die Zusammensetzungen vorzugsweise frei sind von kautschukfreiem Polyalkyl(alkyl)acrylat, und wobei alle Gewichtsteilangaben in der vorliegenden Anmeldung so normiert sind, dass die Summe der Gewichtsteile der Komponenten A + B + C bzw. A + B* + C in der Zusammensetzung 100 ergeben,
und wobei die Wanddicke des Sicherheitswandabschnittes 0,8 mm bis 2,0 mm, besonders bevorzugt 0,8 bis 1,0 mm beträgt
und wobei die Wanddicke im Bereich des Sicherheitswandabschnittes geringer ist als in den anderen Bereichen des Batteriemodulgehäuses, welche bevorzugt eine Wanddicke von 3,0 mm bis 5,0 mm, besonders bevorzugt von 3,0 mm bis 3,5 mm aufweisen.

Es versteht sich, dass die in dem Batteriemodulgehäuse angeordneten Batteriezellen sehr unterschiedliche Größen und Formen aufweisen können, z.B. zylindrisch und klein, ähnlich AA-Zellen, oder auch zylindrisch und groß, ähnlich Getränkedosen. Daher variiert, je nach Batteriezelle, die im Versagensfall austretende Flammenenergie stark. Die Dicke des Sicherheitswandabschnittes und des sonstigen Gehäuses werden bevorzugt der Batteriezellengröße angepasst. Ähnliches gilt für prismatische Zellen und Pouchzellen.

Die oben genannte Aufgabe wird weiterhin bei einem Batteriepack mit einem Batteriepackgehäuse, wobei das Batteriepackgehäuse einen Batteriepackinnenraum umschließt und wobei das Batteriepackgehäuse Batteriepackinnenraum-seitig mindestens eine Aufnahme für ein Batteriemodul aufweist, erfindungsgemäß zumindest teilweise dadurch gelöst, dass das Batteriepack ein in der Aufnahme aufgenommenes erfindungsgemäßes Batteriemodul aufweist.

In Elektrofahrzeugen werden in der Regel keine einzelnen Batteriemodule, sondern Batteriepacks eingebaut, in denen mehrere Batteriemodule in einem Batteriepackgehäuse zusammengefasst sind. Indem ein solches Batteriepack mit erfindungsgemäßen Batteriemodulen ausgestattet wird, werden die zuvor für das erfindungsgemäße Batteriemodul beschriebenen Vorteile erreicht.

Zur Aufnahme der Batteriemodule kann das Batteriepack Batteriepackinnenraum-seitig, d.h. auf der Innenseite des Batteriepackgehäuses, beispielsweise Stützen, Schienen, Vertiefungen oder andere Haltemittel aufweisen.

Bei einer Ausführungsform des Batteriepacks weist das Batteriepack im Batteriepackinnenraum auf der Seite des Sicherheitswandabschnitts des Batteriemodulgehäuses einen Freiraumbereich auf, so dass das Batteriemodul in diesem Bereich von dem Batteriepackgehäuse und anderen Batteriemodulen im Batteriepack beabstandet ist.

Durch die Beabstandung des Batteriepacks im Bereich des Sicherheitswandabschnitts wird ein Sicherheitsfreiraum zur Verfügung gestellt, in den die Energie einer Flamme, die im Schadensfall aus einer im Batteriemodul angeordneten Batteriezelle austreten und das Batteriemodulgehäuse im Bereich eines zugeordneten Sicherheitswandabschnitts durchbrennen kann, einleitbar ist. Auf diese Weise kann verhindert werden, dass durch die Energie der Flamme andere Komponenten innerhalb des Batteriepacks bzw. das Batteriepack selbst beschädigt werden. Hierzu beträgt der Abstand zwischen dem Batteriemodul und dem Batteriepackgehäuse sowie anderen Batteriemodulen auf der Seite des Sicherheitswandabschnitts des Batteriemoduls vorzugsweise mindestens 5 cm.

Bei einer weiteren Ausführungsform des Batteriepacks weist das Batteriepack im Batteriepackinnenraum auf der Seite des Sicherheitswandabschnitts des Batteriemodulgehäuses einen Kanal auf, der zum Ableiten der Energie einer durch den Sicherheitswandabschnitt hindurchtretenden Flamme ausgebildet ist. Bei einer weiteren Ausführungsform des Batteriepacks weist das Batteriepackgehäuse einen dem Sicherheitswandabschnitt des Batteriemodulgehäuses zugeordneten Sicherheitswandabschnitt auf, dessen Materialeigenschaften und dessen Dicke derart beschaffen sind, dass der Sicherheitswandabschnitt im Nadelflammtest nach DIN EN ISO 11925-2 nach maximal 45 s, vorzugsweise maximal 20 s, weiter bevorzugt maximal 10 s, insbesondere maximal 5 s, ein Durchbrennen zeigt.

Sofern das Material des Sicherheitswandabschnittes und des sonstigen Batteriepackgehäuses dasselbe ist, weist das sonstige Batteriepackgehäuse, also das Gehäuse in anderen Bereichen als im Bereich des Sicherheitswandabschnitts, eine größere Wanddicke als der Sicherheitswandabschnitt auf. Bevorzugt beträgt die Wanddicke des Sicherheitsabschnittes 0,8 mm bis 2,0 mm, weiter bevorzugt 0,8 bis 1,0 mm und die Wanddicke des sonstigen Batteriepackgehäuses 3,0 mm bis 5,0 mm, weiter bevorzugt 3,0 bis 3,5 mm in diesem Fall.

Vorzugsweise sind die Materialeigenschaften und die Dicke des Sicherheitswandabschnitts derart beschaffen, dass der Sicherheitswandabschnitt bei Beaufschlagung mit einer Flamme, die eine Temperatur von mindestens 600 °C aufweist, nach maximal 5 s, vorzugsweise maximal 4 s, insbesondere maximal 3 s, durchgebrannt ist, so dass sich im Batteriepackgehäuse in diesem Bereich eine Öffnung bildet.

Eine aus einer im Batteriemodul angeordneten Batteriezelle austretende Flamme kann so nach dem Durchbrennen des Sicherheitswandabschnitts des Batteriemoduls auch den Sicherheitswandabschnitt des Batteriepacks durchbrennen. Auf diese Weise kann die Energie der Flamme nicht nur aus dem Batteriemodulgehäuse, sondern auch aus dem umgebenden Batteriepackgehäuse abgeleitet werden.

Bei einer weiteren Ausführungsform des Batteriepacks umfasst mindestens der Sicherheitswandabschnitt des Batteriepackgehäuses, vorzugsweise das gesamte oder im Wesentlichen das gesamte Batteriepackgehäuse, einen flammgeschützten Werkstoff, insbesondere einen flammgeschützten Kunststoff. Wie zuvor in Bezug auf den Sicherheitswandabschnitt des Batteriemodulgehäuses bzw. auf das Batteriemodulgehäuse selbst ausgeführt, kann durch die Verwendung eines solchen Werkstoffs verhindert werden, dass der Sicherheitsabschnitt bzw. das Batteriemodul- oder Batteriepackgehäuse nach dem Erlöschen einer aus einer Batteriezelle austretenden Flamme weiter brennt. Damit kann die Ausbreitung eines Feuers verhindert werden.

Bei einer weiteren Ausführungsform des Batteriepacks umfasst mindestens der Sicherheitswandabschnitt des Batteriepackgehäuses, vorzugsweise das gesamte oder im Wesentlichen das gesamte Batteriepackgehäuse, ein Polycarbonatmaterial. Wie zuvor in Bezug auf den Sicherheitswandabschnitt des Batteriemodulgehäuses bzw. auf das Batteriemodulgehäuse selbst ausgeführt, weisen Polycarbonatmaterialien eine gute Elastizität und eine hohe Zähigkeit auf, und zwar insbesondere auch bei tiefen Temperaturen von -30 °C, die beim Einsatz in Elektrofahrzeugen auftreten können. Weiterhin ist ein guter Flammenschutz dieser Materialien möglich.

Als Polycarbonatmaterialien kommen für den Sicherheitswandabschnitt des Batteriepackgehäuses, insbesondere für das Batteriepackgehäuse selbst, grundsätzlich die bereits zuvor für den Sicherheitswandabschnitt des Batteriemodulgehäuses bzw. für das Batteriemodulgehäuse selbst aufgeführten Polycarbonatzusammensetzungen in Frage, so dass auf die diesbezügliche Beschreibung verwiesen wird.

Weiterhin kommen für den Sicherheitswandabschnitt des Batteriepackgehäuses bzw. für das Batteriepackgehäuse selbst auch die übrigen, zuvor für den Sicherheitswandabschnitt des Batteriemodulgehäuses bzw. für das Batteriemodulgehäuse selbst genannte Materialien, insbesondere die flammgeschützten Thermoplaste, in Frage.

Bei einer weiteren Ausführungsform des Batteriepacks weist das Batteriepackgehäuse im Bereich des Sicherheitswandabschnitts eine mit einer Folie abgedeckte Öffnung auf. Zu diesem Zweck kann beispielsweise bei der Herstellung des Batteriepackgehäuses im Bereich des Sicherheitswandabschnitts eine Öffnung vorgesehen werden, die anschließend mit einer Folie verschlossen wird. Die Folie kann mit dem die Öffnung umgebenden Material des Batteriepackgehäuses beispielsweise verklebt, verschweißt oder auf andere Weise an diesem befestigt werden. Die Wanddicke im Sicherheitswandabschnitt entspricht dann der Foliendicke, welche beispielsweise im Bereich von 10 µm bis 500 µm liegen kann. Mit dieser Ausführungsform können damit besonders dünne Wanddicken im Sicherheitswandabschnitt erreicht werden. Für die Folie kommen insbesondere Folien aus Kunststoff in Betracht, beispielsweise aus einem der zuvor für das Batteriemodulgehäuse beschriebenen Kunststoffe.

Die oben genannte Aufgabe wird weiterhin bei einem Elektrofahrzeug erfindungsgemäß zumindest teilweise dadurch gelöst, dass das Elektrofahrzeug ein erfindungsgemäßes Batteriemodul und/oder ein erfindungsgemäßes Batteriepack aufweist.

Durch das Vorsehen eines solchen Batteriemoduls bzw. Batteriepacks in einem Elektrofahrzeug kann aufgrund der erhöhten Betriebssicherheit des Batteriemoduls bzw. des Batteriepacks entsprechend auch die Betriebssicherheit des Elektrofahrzeugs verbessert werden. Hinsichtlich der übrigen Vorteile wird auf die vorige Darstellung hinsichtlich des Batteriemoduls und des Batteriepacks verwiesen.

In einer Ausführungsform des Elektrofahrzeugs ist das Batteriemodul bzw. das Batteriepack so in dem Elektrofahrzeug angeordnet, dass ein Sicherheitswandabschnitt des Batteriemoduls bzw. des Batteriepacks von anderen Bauteiloberflächen des Elektrofahrzeugs, insbesondere von Karosserieblechoberflächen, beabstandet ist.

Durch die Beabstandung des Sicherheitswandabschnitts von Bauteiloberflächen des Elektrofahrzeugs wird ein Sicherheitsfreiraum bereitgestellt, in den die Energie einer aus dem Batteriemodul bzw. aus dem Batteriepack austretenden Flamme abgeführt werden kann, so dass die Gefahr einer Beschädigung von Bauteilen, insbesondere von Karosserieblechbauteilen und vor allem brennbaren Kunststoffbauteilen des Elektrofahrzeugs reduziert wird. Weiterhin wird mit dem Sicherheitsfreiraum erreicht, dass die Energie der Flamme nicht durch die Bauteile des Elektrofahrzeugs, insbesondere durch dessen Karosserieblechbauteile, in das Batteriemodul bzw. in das Batteriepack zurück geführt wird. Damit kann die Betriebssicherheit des Elektrofahrzeugs weiter erhöht werden.

Der Abstand zwischen dem Sicherheitswandabschnitt des Batteriemoduls bzw. des Batteriepacks von anderen Bauteiloberflächen des Elektrofahrzeugs, insbesondere von Karosserieblechoberflächen, beträgt vorzugsweise mindestens 5 cm. Hierdurch wird ein ausreichend großer Sicherheitsfreiraum geschaffen, um die Energie einer aus dem Batteriepack bzw. Batteriemodul austretenden Flamme sicher abzuführen. Vorzugsweise kann zur Realisierung des Abstandes ein Abstandhalter vorgesehen sein, der zwischen dem Batteriemodul bzw. dem Batteriepack und einer anderen Bauteiloberfläche des Elektrofahrzeugs angeordnet ist. Beispielsweise kann eine Stütze vorgesehen sein, mit dem das Batteriemodul bzw. das Batteriepack auf einer Karosserieoberfläche des Elektrofahrzeugs abgestützt ist.

Weitere Merkmale und Vorteile der vorliegenden Erfindung können der nachfolgenden Beschreibung von Ausführungsbeispielen entnommen werden, wobei auf die beigefügte Zeichnung Bezug genommen wird.
- Fig. 1: zeigt ein Ausführungsbeispiel eines erfindungsgemäßen Batteriemoduls sowie eines erfindungsgemäßen Batteriepacks,
- Fig. 2: zeigt einen Detailausschnitt des Ausführungsbeispiels aus Figur 1,
- Fig. 3: zeigt das Batteriemodul aus Figur 1 in einer Unteransicht und
- Fig. 4: zeigt ein Ausführungsbeispiel eines erfindungsgemäßen Elektrofahrzeugs mit einem erfindungsgemäßen Batteriepack.

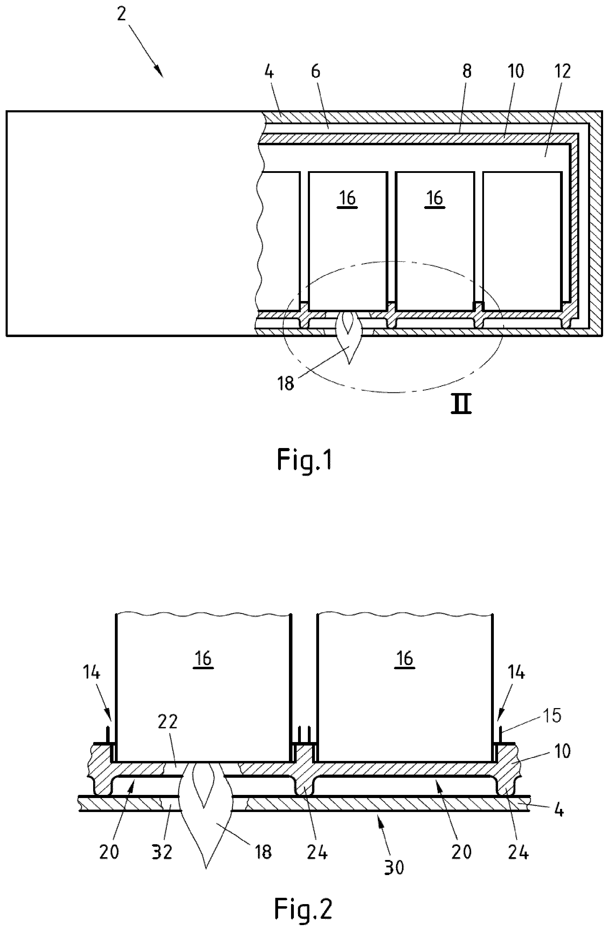

Figur 1 zeigt ein Ausführungsbeispiel eines erfindungsgemäßen Batteriepacks 2 sowie eines erfindungsgemäßen Batteriemoduls 8 im Querschnitt. Figur 2 zeigt zudem den in Figur 1 mit II markierten Ausschnitt in vergrößerter und detaillierterer Darstellung.

Das Batteriepack 2 weist ein Batteriepackgehäuse 4 auf, welches einen Batteriepackinnenraum 6 umschließt. Batteriepackinnenraum-seitig weist das Batteriepackgehäuse 4 mehrere Aufnahmen (nicht dargestellt) für Batteriemodule auf.

In den Aufnahmen sind Batteriemodule angeordnet, von denen in Figur 1 das Batteriemodul 8 zu sehen ist. Das Batteriemodul 8 umfasst ein Batteriemodulgehäuse 10, welches einen Batteriemodulinnenraum 12 umschließt. Batteriemodulinnenraum-seitig weist das Batteriemodulgehäuse 10 Aufnahmen 14 für eine vorgegebene Anzahl von Batteriezellen 16 auf. Die Aufnahmen 14 können beispielsweise wie in Figur 2 gezeigt als im Wesentlichen kreisförmige Vertiefungen in das Batteriemodulgehäuse 10 eingebracht sein. Alternativ oder zusätzlich können die Aufnahmen 14 auch an der Innenseite des Batteriemodulgehäuses angeordnete Kragen 15 aufweisen, welche beispielsweise einen im Wesentlichen kreisförmigen Rand zur Aufnahme einer Batteriezelle 16 bilden.

Das Batteriemodul 8 weist in Figur 1 die vorgegebene Anzahl an Batteriezellen 16 auf, wobei jeweils eine Batteriezelle 16 in einer Aufnahme 14 des Batteriemoduls 8 angeordnet ist. Bei den Batteriezellen 16 handelt es sich beispielsweise um Lithiumionenakkus in Zylinderform. Die Batteriezellen 16 weisen bodenseitig jeweils eine Sollbruchstelle (nicht dargestellt) auf, so dass eine im Schadensfall aus einer Batteriezelle 16 austretende Flamme 18 nicht an irgendeiner Stelle der Batteriezelle 16 austritt, sondern gezielt an deren Unterseite.

Das Batteriemodulgehäuse 10 weist im Bereich jeder Aufnahme 14 jeweils einen Sicherheitswandabschnitt 20 auf, dessen Materialeigenschaften und Dicke so vorgesehen sind, dass der Sicherheitswandabschnitt 20 im Nadelflammtest nach DIN EN ISO 11925-2 nach maximal 45 s, besser nach maximal 20 s, vorzugsweise maximal 10 s, insbesondere maximal 5 s, ein Durchbrennen zeigt. Dadurch wird erreicht, dass der Sicherheitswandabschnitt 20 bei Beaufschlagung mit einer Flamme 18, die beispielsweise eine Temperatur von ca. 600 °C aufweisen kann, nach wenigen Sekunden, insbesondere nach maximal 5 Sekunden, durchgebrannt ist, so dass sich im Batteriemodulgehäuse in diesem Bereich eine Öffnung 22 bildet.

Der Sicherheitswandabschnitt 20 kann beispielsweise ein flammgeschütztes Polycarbonatmaterial umfassen. Die Dicke des Sicherheitswandabschnitts 20 beträgt in diesem Bereich vorzugsweise 0,8 bis 2 mm. Auf diese Weise wird ein Durchbrennen des Sicherheitswandabschnitts 20 bei Beaufschlagung mit der Flamme 18 in der vorgegebenen Zeit erreicht. Die Verwendung eines flammgeschützten Polycarbonatmaterials hat zudem den Vorteil, dass das Polycarbonatmaterial nach dem Erlöschen der Flamme 18 nicht weiter brennt, sondern ebenfalls erlischt, so dass sich das Feuer nicht ausbreiten kann.

Die Batteriemodulgehäuseseite, in dem die Sicherheitswandabschnitte 20 angeordnet sind, weisen eine Verrippung 24 in Form mehrerer sich überkreuzender Stege auf. Durch diese Verrippung 24 kann die Wanddicke der Sicherheitswandabschnitte 20 sehr dünn ausgebildet werden, ohne dass sich die strukturellen Eigenschaften des Batteriemodulgehäuses 10 zu sehr verschlechtern.

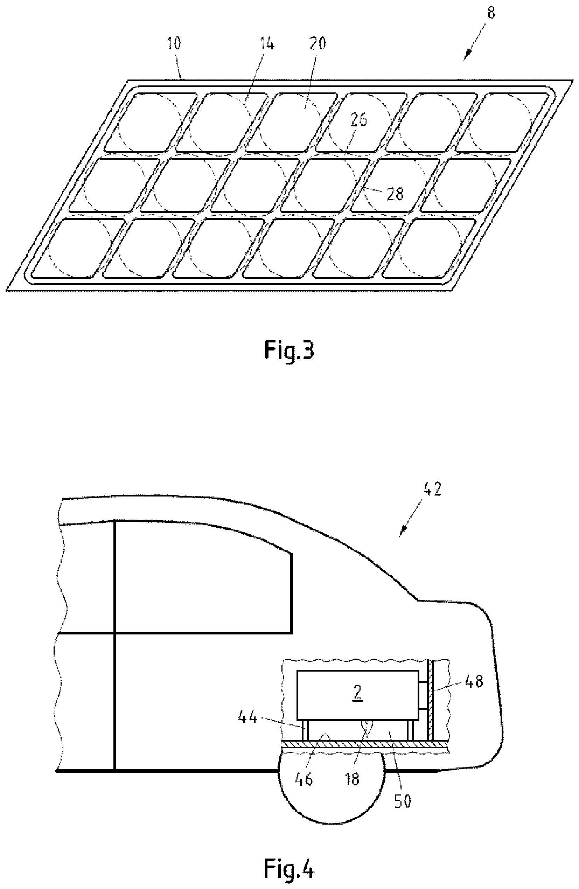

Figur 3 zeigt eine Unteransicht des Batteriemoduls 8 mit einer möglichen Ausgestaltung der Verrippung 24. Das Batteriemodul 8 weist Batteriemodulinnenraum-seitig in diesem Beispiel fünf mal drei Aufnahmen 14 für insgesamt 15 Batteriezellen, beispielsweise vom Typ 18650, auf. Die Aufnahmen 14 sind jeweils reihenweise versetzt angeordnet, um eine möglichst hohe Packungsdichte und damit eine Raumersparnis zu erzielen. Dadurch ergibt sich für das Batteriemodulgehäuse 10 insgesamt ein rautenförmiger Querschnitt.

Die Unterseite des Batteriemodulgehäuses 10 weist eine Anzahl von im Wesentlichen längslaufenden Rippen 26 und eine Anzahl von im Wesentlichen querlaufenden Rippen 28 auf, die insgesamt eine an die Anordnung der Aufnahmen 14 angepasste, im vorliegenden Beispiel rautenförmige Verrippung 24 des Batteriemodulgehäuses 10 ergeben. Vorzugsweise ist die Verrippung 24 so angeordnet, dass die Rippen jeweils außerhalb der Sicherheitswandabschnitte 20 verlaufen. Auf diese Weise wird gewährleistet, dass ein Sicherheitswandabschnitt bei Beaufschlagung mit einer Flamme 18 in der vorgegebenen Zeit durchbrennt, ohne dass das Durchbrennen durch die Rippen 26, 28 behindert wird.

Das Batteriepackgehäuse 4 des Batteriepacks 2 weist den Sicherheitswandabschnitten 20 zugeordnete Sicherheitswandabschnitte 30 auf, deren Materialeigenschaften und deren Dicke derart beschaffen sind, dass die Sicherheitswandabschnitte 30 im Nadelflammtest nach DIN EN ISO 11925-2 nach maximal 45 s, besser nach maximal 20 s, vorzugsweise maximal 10 s, insbesondere maximal 5 s, ein Durchbrennen zeigen. Dadurch wird erreicht, dass die Sicherheitswandabschnitte 30 bei Beaufschlagung mit einer Flamme 18 nach wenigen Sekunden durchgebrannt sind, so dass sich im Batteriepackgehäuse 4 in diesem Bereich eine Öffnung 32 bildet. So kann eine aus einer Batteriezelle 16 austretende Flamme 18 zunächst im Sicherheitswandabschnitt 20 durch das Batteriemodulgehäuse 10 und dann im Sicherheitswandabschnitt 30 durch das Batteriepackgehäuse 4 durchbrennen. Die Energie der Flamme kann dadurch sowohl aus dem Batteriemodul 8, als auch aus dem Batteriepack 2 hinausgelangen, so dass eine Beschädigung weiterer Batteriezellen 16 verhindert werden kann.

Zur Bereitstellung der Sicherheitswandabschnitte 30 des Batteriepackgehäuses 4 weist die Unterseite des Batteriepackgehäuses 4 eine durchgehend verringerte Dicke von 0,8 mm auf. Die Sicherheitswandabschnitte 30 bilden also einen zusammenhängenden, großen Sicherheitswandabschnitt. Vorzugsweise umfasst die Unterseite des Batteriepackgehäuses 4, insbesondere im Wesentlichen das gesamte Batteriepackgehäuse 4, ein flammgeschütztes Polycarbonatmaterial.

Figur 4 zeigt ein Ausführungsbeispiel eines erfindungsgemäßen Elektrofahrzeugs im schematischen Teilschnitt von der Seite. Im unteren Kofferraumbereich des Elektrofahrzeugs 42 ist das Batteriepack 2 aus Figur 1 angeordnet. Das Batteriepack 2 ist mittels Stützen 44 auf einer Bauteiloberfläche 46 des Elektrofahrzeugs 42 befestigt. Für einen sicheren Sitz ist das Batteriepack 2 zusätzlich seitlich an einer im Wesentlichen vertikal verlaufenden Bauteilstruktur 48 des Elektrofahrzeugs 42 befestigt.

Durch die Stützen 44 wird zwischen der Unterseite des Batteriepacks 2 und der Bauteiloberfläche 46 ein Sicherheitsfreiraum 50 geschaffen, so dass im Schadensfall eine aus dem Batteriepack 2 austretende Flamme 18 nicht unmittelbar auf die Bauteiloberfläche 46 auftrifft, sondern in den Sicherheitsfreiraum 50 geleitet wird.

Dadurch kann eine Beschädigung der Bauteiloberfläche 46 durch die Flamme 18 reduziert oder verhindert werden. Weiterhin wird verhindert, dass die Energie der Flamme 18 durch die Bauteiloberfläche 46 zurück in das Batteriepack 2 geleitet wird, wo es durch die Energie der Flamme 18 ansonsten zu einer Beschädigung weiterer Batteriezellen 16 kommen könnte.

Im Folgenden werden noch weitere Beispiele für Polycarbonatzusammensetzungen beschrieben, die für Sicherheitswandabschnitte von Batteriemodulgehäusen oder Batteriepackgehäusen bzw. für Batteriemodulgehäuse oder Batteriepackgehäuse oder Teile davon besonders geeignet sind.

### Beispiele

### Komponente A-1

Lineares Polycarbonat auf Basis Bisphenol A mit einer relativen Lösungsviskosität von ηᵣₑₗ = 1,28 gemessen in CH₂Cl₂ als Lösungsmittel bei 25 °C und einer Konzentration von 0,5 g/100 ml.

### Komponente B-1:

Silikon-Acrylat-Kompositkautschuk mit folgender Zusammensetzung:
Polymethylmethacrylat/Silikonkautschuk/Acrylatkautschuk: 14/31/55 Gew.-%

### Komponente B-2:

Silikon-Acrylat-Kompositkautschuk mit folgender Zusammensetzung:
Polymethylmethacrylat/Silikonkautschuk/Acrylatkautschuk: 11/82/7 Gew.-%

### Komponente B*:

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmigen vernetzten Polybutadienkautschuks (mittlerer Teilchendurchmesser d₅₀ = 0,35 µm), wobei das Pfropfpolymerisat ca. 15 % freies, lösliches SAN enthält. Der Gelgehalt beträgt 72%.

### Komponente C:

### Bisphenol-A basierendes Oligophosphat (Reofoss BAPP) gemäß Formel (VIa)

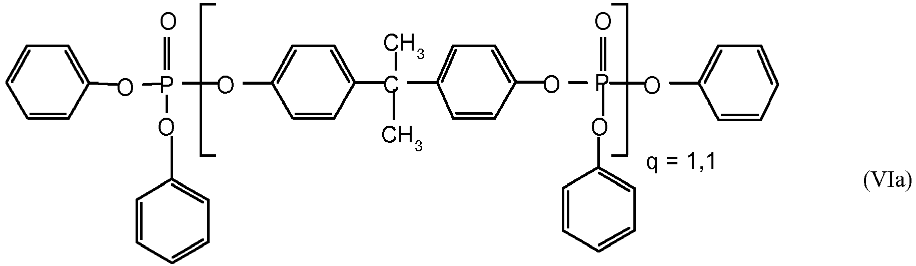

### Komponente D:

Polytetrafluorethylen-Pulver, CFP 6000 N, Fa. Du Pont.

### Komponente F:

F-1: Pentaerythrittetrastearat als Gleit-/Entformungsmittel
F-2: Phosphitstabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol).

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260 °C compoundiert und granuliert. Die fertigen Granulate werden auf einer Spritzgussmaschine zu den entsprechenden Probekörpern verarbeitet (Massetemperatur 240 °C , Werkzeugtemperatur 80 °C, Fließfrontgeschwindigkeit 240 mm/s).

Auf die gleiche Weise werden auf einem Zweischneckenextruder (ZSK-25) (Fa. Werner und Pfleiderer) die in Tabelle 2 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240 °C , Werkzeugtemperatur 80°C, Fließfrontgeschwindigkeit 240 mm/s).

Zur Charakterisierung der Eigenschaften der Probekörper wurden folgende Methoden angewandt:
Die **Fließfähigkeit** wurde nach ISO 11443 (**Schmelzeviskosität**) bestimmt.

Die **Kerbschlagzähigkeit** ak wurde gemessen nach ISO 180/1A an einem einseitig angespritzten Prüfstab der Dimension 80x10x4 mm bei den angegebenen Meßtemperaturen.

Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.

Das **Brandverhalten** wird nach UL 94V an Stäben der Abmessung 127 x 12,7 x 1,5 mm gemessen.

Die **Reißdehnung** und **Zug-E-Modul** wurden nach DIN EN ISO 527 an Stäben der Abmessung 170,0 x 10,0 x 4,0 mm gemessen.

Unter Chemikalienbeständigkeit **(ESC-Verhalten)** wird die Zeit bis zum Bruch bei 2,4 % Randfaserdehnung nach Lagerung des Probekörpers in den gegebenen Testsubstanzen bei Raumtemperatur an einem einseitig angespritzten Prüfstab der Dimension 80x10x4 mm angegeben.

**Tabelle 1: Zusammensetzungen und ihre Eigenschaften**

| **Komponenten** | **Gew**.-**%** | **1** | **2** | **3** | **4** |
|---|---|---|---|---|---|
| A1 | | 84,10 | 78,10 | 84,10 | 78,10 |
| B1 | | | | 9,00 | 11,00 |
| B2 | | 9,00 | 11,00 | | |
| C | | 6,00 | 10,00 | 6,00 | 10,00 |
| D | | 0,40 | 0,40 | 0,40 | 0,40 |
| F1 | | 0,40 | 0,40 | 0,40 | 0,40 |
| F2 | | 0,10 | 0,10 | 0,10 | 0,10 |
| Summe | | 100,00 | 100,00 | 100,00 | 100,00 |
| **Eigenschaften** | Einheiten | | | | |
| ak ISO 180/1A bei RT | [kJ/m²] | 59 | 57 | 60 | 58 |
| ak ISO 180/1A bei -20 °C | [kJ/m²] | 45 | 42 | 42 | 37 |
| ak ISO 180/1A bei -40 °C | [kJ/m²] | 32 | 30 | 20 | 18 |
| Vicat B 120 | [°C] | 120 | 109 | 120 | 109 |
| UL 94 V /1,5 mm | | V-0 | V-0 | V-0 | V-0 |
| Nachbrennzeit | [s] | 10 | 12 | 20 | 16 |
| Schmelzeviskosität 260 °C/1000 s⁻¹ | [Pas] | 370 | 297 | 366 | 292 |
| ESC bei 2,4% Toluol/Isopropanol (60:40) | h:min | 14:08 | 30:00 | 7:00 | 14:36 |
| ESC bei 2,4% Rapsöl | h:min | 7:45 | 2:45 | 7:00 | 2:39 |
| ESC bei 2,4% Glykol/Wasser (50:50) | h:min | 125:50 | 124:00 | 122:20 | 67:00 |
| ESC bei 2,4% Hydrauliköl | h:min | 168:00 | 168:00 | 168:00 | 168:00 |
| Zug-E-Modul | N/mm² | 2248 | 2258 | 2242 | 2263 |
| Reißdehnung | % | 106 | 110 | 103 | 110 |

**Tabelle 2: Zusammensetzungen und ihre Eigenschaften**

| **Komponenten** | **Gew**.-**%** | **5** | **6** |
|---|---|---|---|
| | | | |
| A1 | | 84,10 | 78,10 |
| B* | | 9,00 | 11,00 |
| C | | 6,00 | 10,00 |
| D | | 0,40 | 0,40 |
| F-1 | | 0,40 | 0,40 |
| F-2 | | 0,10 | 0,10 |
| | | | |
| Summe | | 100,00 | 100,00 |
| **Eigenschaften** | Einheiten | | |
| ak ISO 180/1A bei RT | [kJ/m²] | 52 | 57 |
| ak ISO 180/1A bei -20 °C | [kJ/m²] | 34 | 33 |
| ak ISO 180/1A bei -40 °C | [kJ/m²] | 18 | 17 |
| an Bindenaht | [kJ/m²] | 74 | 73 |
| Vicat B 120 | [°C] | 120 | 110 |
| UL 94 V /1,5 mm | | V-1 | V-1 |
| Nachbrennzeit | [s] | 54 | 50 |
| UL 94 V /2,5 mm | | V-0 | V-0 |
| Nachbrennzeit | [s] | 15 | 11 |
| Schmelzevisko. | | | |
| 260 °C/1000 s⁻¹ | [Pas] | 415 | 319 |
| ESC bei 2,4% Toluol/Isopropanol | h:min | 2:42 | 4:01 |
| ESC bei 2,4% Rapsöl | h:min | 3:57 | 2:05 |
| ESC bei 2,4% Glykol/Wasser (50:50) | h:min | 108:00 | 149:00 |
| ESC bei 2,4% Hydrauliköl | h:min | 168:00 | 168:00 |
| Reißdehnung | % | | |
| Zug-E-Modul | N/mm² | 2340 | 2350 |

| | | | |
|---|---|---|---|
| Mischung Toluol/Isopropanol: 60/40 Gew.-% | | | |

Versuche haben gezeigt, dass mit den zuvor genannten Polycarbonatzusammensetzungen Sicherheitswandabschnitte von Batteriemodulgehäusen hergestellt werden können, insbesondere mit einer Wanddicke im Bereich 0,8 mm bis 3 mm, die im Nadelflammtest nach DIN EN ISO 11925-2 nach maximal 45 s, maximal 20 s, maximal 10 s oder sogar maximal 5 s ein Durchbrennen zeigen.

## Patentansprüche

1. Batteriemodul (8)
- mit einem Batteriemodulgehäuse (10),
- wobei das Batteriemodulgehäuse (10) einen Batteriemodulinnenraum (12) umschließt und
- wobei das Batteriemodulgehäuse (10) Batteriemodulinnenraum-seitig Aufnahmen (14) für eine vorgegebene Anzahl von Batteriezellen (16) aufweist,
wobei
- das Batteriemodulgehäuse (10) im Bereich mindestens einer Aufnahme (14) einen Sicherheitswandabschnitt (20) umfasst, dessen Materialeigenschaften und dessen Dicke derart beschaffen sind, dass der Sicherheitswandabschnitt (20) im Nadelflammtest nach DIN EN ISO 11925-2 nach maximal 45 s ein Durchbrennen zeigt,
wobei die Wanddicke im Bereich des Sicherheitswandabschnittes (20) geringer ist als in den anderen Bereichen des Batteriemodulgehäuses (10) und wobei der Sicherheitswandabschnitt (20) eine Dicke im Bereich von 0,5 mm bis 3 mm aufweist, **dadurch gekennzeichnet, dass** das Material des Sicherheitsabschnittes (20) und das Material in anderen Bereichen des Batteriemodulgehäuses (10) als im Bereich des Sicherheitswandabschnittes (20) dasselbe ist und das gesamte Batteriemodulgehäuse ein Polycarbonatmaterial umfasst.

2. Batteriemodul (8) nach Anspruch 1, **dadurch gekennzeichnet, dass** der Sicherheitswandabschnitt (20) in einem zur Aufnahme (14) der Unterseite einer Batteriezelle (16) ausgebildeten Bereich der Aufnahme (14) angeordnet ist.

3. Batteriemodul (8) nach Anspruch 1 oder 2, **dadurch gekennzeichnet, dass** das vom gesamten Batteriemodulgehäuse (10) umfasste Polycarbonatmaterial eine Polycarbonatzusammensetzung ist, welche die nachfolgenden Komponenten A + B + C oder A + B* + C sowie jeweils optional die Komponenten D, E und/oder F mit den jeweils angegebenen Anteilen enthält:
A) 70,0 bis 90,0 Gew.-Teile (bezogen auf die Summe der Gew.-Teile der Komponenten A + B + C bzw. A + B* + C) lineares und/ oder verzweigtes aromatisches Polycarbonat und/oder aromatisches Polyestercarbonat,
B) 6,0 bis 15,0 Gew.-Teile (bezogen auf die Summe der Gew.-Teile der Komponenten A + B + C) mindestens eines Pfropfpolymerisats mit
B.1) 5 bis 40 Gew.-% (jeweils bezogen auf das Pfropfpolymerisat B) einer Hülle aus mindestens einem Vinylmonomeren und
B.2) 95 bis 60 Gew.-% (jeweils bezogen auf das Pfropfpolymerisat B) einer oder mehrerer Pfropfgrundlagen aus Silikon-Acrylat-Kompositkautschuk,
B*) 6,0 bis 15,0 Gew.-Teile (bezogen auf die Summe der Gew.-Teile der Komponenten A + B* + C) mindestens eines Pfropfpolymerisats mit
B*.1) 5 bis 95 einer Mischung aus
B*.1.1) 50 bis 95 Gew.-Teilen Styrol, α-Methylstyrol, methylkernsubstituiertem Styrol, C₁- bis C₈-Alkylmethacrylat, C₁- bis C₈-Alkylacrylat oder Mischungen dieser Verbindungen und
B*.1.2) 5 bis 50 Gew.-Teilen Acrylnitril, Methacrylnitril, C₁- bis C₈-Alkylmethacrylaten, C₁- bis C₈-Alkylacrylat, Maleinsäureanhydrid, C₁- bis C₄-alkyl- bzw. -phenyl-N-substituierte Maleinimide oder Mischungen dieser Verbindungen auf
B*.2) 5 bis 95 Gew.-Teilen einer kautschukhaltigen Pfropfgrundlage auf Butadien- oder Acrylatbasis,
C) 2,0 bis 15,0 Gew.-Teile (bezogen auf die Summe der Gew.-Teile der Komponenten A + B + C bzw. A + B* + C) Phosphorverbindungen, ausgewählt aus den Gruppen der Mono- und oligomeren Phosphor- und Phosphonsäureester, Phosphonatamine, Phosphazene und Phosphinate sowie Mischungen dieser Verbindungen,
D) 0 bis 3,0 Gew.-Teile (bezogen auf die Summe der Gew.-Teile der Komponenten A + B + C bzw. A + B* + C) Antitropfmittel,
E) 0 - 3,0 Gew.-Teile (bezogen auf die Summe der Gew.-Teile der Komponenten A + B + C bzw. A + B* + C) thermoplastische Vinyl(Co)Polymerisat (E.1) und/oder Polyalkylenterephthalat (E.2), und
F) 0 bis 20,0 Gew.-Teile (bezogen auf die Summe der Gew.-Teile der Komponenten A + B + C bzw. A + B* + C) weitere Zusatzstoffe,
wobei die Zusammensetzungen vorzugsweise frei sind von kautschukfreiem Polyalkyl(alkyl)acrylat, und wobei alle Gewichtsteilangaben in der vorliegenden Anmeldung so normiert sind, dass die Summe der Gewichtsteile der Komponenten A + B + C bzw. A + B* + C in der Zusammensetzung 100 ergeben.

4. Batteriemodul (8) nach einem der Ansprüche 1 bis 3, **dadurch gekennzeichnet, dass** das Batteriemodulgehäuse (10) mindestens im Bereich des Sicherheitswandabschnitts (20) verrippt ist.

5. Batteriemodul (8) nach einem der vorhergehenden Ansprüche, **dadurch gekennzeichnet, dass** das Batteriemodul (8) die vorgegebene Anzahl von Batteriezellen (16) umfasst, wobei die einzelnen Batteriezellen (16) in den Aufnahmen (14) angeordnet sind, mindestens eine der Batteriezellen (16) eine Sollbruchstelle für den Austritt einer Flamme (18) in eine Vorzugsrichtung aufweist und die Batteriezelle (16) so in einer Aufnahme (14) angeordnet ist, dass die Vorzugsrichtung dem Sicherheitswandabschnitt (20) der Aufnahme (14) zugeordnet ist.

6. Batteriemodul (8) nach einem der vorhergehenden Ansprüche, **dadurch gekennzeichnet, dass** das Batteriemodulgehäuse (10) und der Sicherheitswandabschnitt (20) mindestens die Klassifizierung V-2 nach UL-94 erfüllen.

7. Batteriemodul (8) nach einem der vorhergehenden Ansprüche, **dadurch gekennzeichnet, dass** die Materialeigenschaften und die Dicke des Sicherheitswandabschnittes (20) derart beschaffen sind, dass der Sicherheitswandabschnitt (20) im Nadelflammtest nach DIN EN ISO 11925-2 nach maximal 20 s, weiter bevorzugt maximal 10 s, insbesondere maximal 5 s, ein Durchbrennen zeigt.

8. Batteriemodul (8) nach Anspruch 1, **dadurch gekennzeichnet, dass** der Sicherheitswandabschnitt (20) eine Dicke im Bereich von 0,8 mm bis 3 mm aufweist und das sonstige Batteriemodulgehäuse in anderen Bereichen als im Bereich des Sicherheitswandabschnittes (20) eine Dicke von 3 mm bis 5 mm aufweist.

9. Batteriepack (2),
- mit einem Batteriepackgehäuse (4),
- wobei das Batteriepackgehäuse (4) einen Batteriepackinnenraum (6) umschließt und
- wobei das Batteriepackgehäuse (4) Batteriepackinnenraum-seitig mindestens eine Aufnahme für ein Batteriemodul (8) aufweist, **dadurch gekennzeichnet, dass**
- das Batteriepack (2) ein in der Aufnahme aufgenommenes Batteriemodul (8) nach einem der Ansprüche 1 bis 8 aufweist.

10. Batteriepack nach Anspruch 9, **dadurch gekennzeichnet, dass** das Batteriepack (2) im Batteriepackinnenraum (6) auf der Seite des Sicherheitswandabschnitts (30) des Batteriemodulgehäuses (10) einen Freiraumbereich aufweist, so dass das Batteriemodul (8) in diesem Bereich von dem Batteriepackgehäuse (4) und anderen Batteriemodulen (8) im Batteriepack (2) beabstandet ist.

11. Batteriepack nach Anspruch 9 oder 10, **dadurch gekennzeichnet, dass** das Batteriepackgehäuse (4) einen dem Sicherheitswandabschnitt (30) des Batteriemodulgehäuses (4) zugeordneten Sicherheitswandabschnitt (30) aufweist, dessen Materialeigenschaften und dessen Dicke derart beschaffen sind, dass der Sicherheitswandabschnitt (30) im Nadelflammtest nach DIN EN ISO 11925-2 nach maximal 45 s ein Durchbrennen zeigt.

12. Batteriepack nach Anspruch 11, **dadurch gekennzeichnet, dass** das gesamte Batteriepackgehäuse (4) ein Polycarbonatmaterial umfasst, wobei das vom gesamten Batteriepackgehäuse (4) umfasste Polycarbonatmaterial eine Polycarbonatzusammensetzung ist, welche die nachfolgenden Komponenten A + B + C oder A + B* + C sowie jeweils optional die Komponenten D, E und/oder F mit den jeweils angegebenen Anteilen enthält:
A) 70,0 bis 90,0 Gew.-Teile (bezogen auf die Summe der Gew.-Teile der Komponenten A + B + C bzw. A + B* + C) lineares und/ oder verzweigtes aromatisches Polycarbonat und/oder aromatisches Polyestercarbonat,
B) 6,0 bis 15,0 Gew.-Teile (bezogen auf die Summe der Gew.-Teile der Komponenten A + B + C) mindestens eines Pfropfpolymerisats mit
B.1) 5 bis 40 Gew.-% (jeweils bezogen auf das Pfropfpolymerisat B) einer Hülle aus mindestens einem Vinylmonomeren und
B.2) 95 bis 60 Gew.-% (jeweils bezogen auf das Pfropfpolymerisat B) einer oder mehrerer Pfropfgrundlagen aus Silikon-Acrylat-Kompositkautschuk,
B*) 6,0 bis 15,0 Gew.-Teile (bezogen auf die Summe der Gew.-Teile der Komponenten A + B* + C) mindestens eines Pfropfpolymerisats mit
B*.1) 5 bis 95 einer Mischung aus
B*.1.1) 50 bis 95 Gew.-Teilen Styrol, α-Methylstyrol, methylkernsubstituiertem Styrol, C₁-bis C₈-Alkylmethacrylat, C₁- bis C₈-Alkylacrylat oder Mischungen dieser Verbindungen und
B*.1.2) 5 bis 50 Gew.-Teilen Acrylnitril, Methacrylnitril, C₁- bis C₈-Alkylmethacrylaten, C₁- bis C₈-Alkylacrylat, Maleinsäureanhydrid, C₁- bis C₄-alkyl- bzw. -phenyl-N-substituierte Maleinimide oder Mischungen dieser Verbindungen auf
B*.2) 5 bis 95 Gew.-Teilen einer kautschukhaltigen Pfropfgrundlage auf Butadien- oder Acrylatbasis,
C) 2,0 bis 15,0 Gew.-Teile (bezogen auf die Summe der Gew.-Teile der Komponenten A + B + C bzw. A + B* + C) Phosphorverbindungen, ausgewählt aus den Gruppen der Mono- und oligomeren Phosphor- und Phosphonsäureester, Phosphonatamine, Phosphazene und Phosphinate, sowie Mischungen dieser Verbindungen,
D) 0 bis 3,0 Gew.-Teile (bezogen auf die Summe der Gew.-Teile der Komponenten A + B + C bzw. A + B* + C) Antitropfmittel,
E) 0 - 3,0 Gew.-Teile (bezogen auf die Summe der Gew.-Teile der Komponenten A + B + C bzw. A + B* + C) thermoplastische Vinyl(Co)Polymerisat (E.1) und/oder Polyalkylenterephthalat (E.2), und
F) 0 bis 20,0 Gew.-Teile (bezogen auf die Summe der Gew.-Teile der Komponenten A + B + C bzw. A + B* + C) weitere Zusatzstoffe,
wobei die Zusammensetzungen vorzugsweise frei sind von kautschukfreiem Polyalkyl(alkyl)acrylat und wobei alle Gewichtsteilangaben in der vorliegenden Anmeldung so normiert sind, dass die Summe der Gewichtsteile der Komponenten A + B + C bzw. A + B* + C in der Zusammensetzung 100 ergeben und wobei das Material des Sicherheitswandabschnittes (30) des Batteriepacks (2) und das Material in anderen Bereichen des Batteriepackgehäuses (4) als im Bereich des Sicherheitswandabschnittes (30) dasselbe ist und die Wanddicke im Bereich des Sicherheitswandabschnittes (30) geringer ist als in den anderen Bereichen des Batteriepackgehäuses (4).

13. Elektrofahrzeug (42), **dadurch gekennzeichnet, dass** das Elektrofahrzeug (42) ein Batteriemodul (8) nach einem der Ansprüche 1 bis 8 und/oder ein Batteriepack (2) nach einem der Ansprüche 9 bis 12 aufweist.

## Claims

1. Battery module (8)
- having a battery module housing (10),
- the battery module housing (10) enclosing a battery module interior (12) and
- the battery module housing (10) having, on the battery module interior side, accommodation spaces (14) for a given number of battery cells (16), where
- the battery module housing (10) comprises, in the region of at least one accommodation space (14), a safety wall section (20) having such material properties and such a thickness that the safety wall section (20), in the needle flame test to DIN EN ISO 11925-2, burns through after not more than 45 s,
the wall thickness in the region of the safety wall section (20) is lower than in the other regions of the battery module housing (10) and where the safety wall section (20) has a thickness in the range from 0.5 mm to 3 mm, **characterized in that** the material of the safety section (20) and the material in regions of the battery module housing (10) other than in the region of the safety wall section (20) is the same and the entire battery module housing comprises a polycarbonate material.

2. Battery module (8) according to Claim 1, **characterized in that** the safety wall section (20) is disposed in a region of the accommodation space (14) formed for accommodation (14) of the underside of a battery cell (16).

3. Battery module (8) according to Claim 1 or 2, **characterized in that** the polycarbonate material comprised by the entire battery module housing (10) is a polycarbonate composition containing the following components A + B + C or A + B* + C, and in each case optionally components D, E and/or F, with the proportions specified in each case:
A) 70.0 to 90.0 parts by weight (based on the sum total of the parts by weight of components A + B + C or A + B* + C) of linear and/or branched aromatic polycarbonate and/or aromatic polyester carbonate,
B) 6.0 to 15.0 parts by weight (based on the sum total of the parts by weight of components A + B + C) of at least one graft polymer comprising
B.1) 5% to 40% by weight (based in each case on the graft polymer B) of a shell composed of at least one vinyl monomer and
B.2) 95% to 60% by weight (based in each case on the graft polymer B) of one or more graft bases composed of silicone-acrylate composite rubber,
B*) 6.0 to 15.0 parts by weight (based on the sum total of the parts by weight of components A + B* + C) of at least one graft polymer comprising
B*.1) 5 to 95 of a mixture of
B*.1.1) 50 to 95 parts by weight of styrene, α-methylstyrene, styrene with methyl substitution on the ring, C₁- to C₈-alkyl methacrylate, C₁- to C₈-alkyl acrylate or mixtures of these compounds and
B*.1.2) 5 to 50 parts by weight of acrylonitrile, methacrylonitrile, C₁- to C₈-alkyl methacrylates, C₁- to C₈-alkyl acrylate, maleic anhydride, C₁- to C₄-alkyl- or - phenyl-N-substituted maleimides or mixtures of these compounds, grafted onto
B*.2) 5 to 95 parts by weight of a rubber-containing butadiene- or acrylate-based graft base,
C) 2.0 to 15.0 parts by weight (based on the sum total of the parts by weight of components A + B + C or A + B* + C) of phosphorus compounds selected from the groups of mono- and oligomeric phosphoric and phosphonic esters, phosphonate amines, phosphazenes and phosphinates, and mixtures of these compounds,
D) 0 to 3.0 parts by weight (based on the sum total of the parts by weight of components A + B + C or A + B* + C) of anti-dripping agent,
E) 0-3.0 parts by weight (based on the sum total of the parts by weight of components A + B + C or A + B* + C) of thermoplastic vinyl (co)polymer (E.1) and/or polyalkylene terephthalate (E.2), and
F) 0 to 20.0 parts by weight (based on the sum total of the parts by weight of components A + B + C or A + B* + C) of further additives,
where the compositions are preferably free of rubber-free polyalkyl(alkyl)acrylate, and where all the parts by weight stated in the present application are normalized such that the sum total of the parts by weight of components A + B + C or A + B* + C in the composition add up to 100.

4. Battery module (8) according to any of Claims 1 to 3, **characterized in that** the battery module housing (10) has fins at least in the region of the safety wall section (20).

5. Battery module (8) according to any of the preceding claims, **characterized in that** the battery module (8) has the given number of battery cells (16), the individual battery cells (16) being disposed in the accommodation spaces (14), at least one of the battery cells (16) having a preferential fracture site for the escape of a flame (18) in a preferential direction, and the battery cell (16) being disposed in an accommodation space (14) such that the preferential direction is in line with the safety wall section (20) of the accommodation space (14).

6. Battery module (8) according to any of the preceding claims, **characterized in that** the battery module housing (10) and the safety wall section (20) fulfil at least the V-2 classification according to UL-94.

7. Battery module (8) according to any of the preceding claims, **characterized in that** the material properties and the thickness of the safety wall section (20) are such that the safety wall section (20), in the needle flame test to DIN EN ISO 11925-2, burns through after not more than 20 s, further preferably not more than 10 s, especially not more than 5 s.

8. Battery module (8) according to Claim 1, **characterized in that** the safety wall section (20) has a thickness in the range from 0.8 mm to 3 mm and the other battery module housing in regions other than in the region of the safety wall section (20) has a thickness of from 3 mm to 5 mm.

9. Battery pack (2)
- having a battery pack housing (4),
- the battery pack housing (4) enclosing a battery pack interior (6) and
- the battery pack housing (4) having, on the battery pack interior side, at least one accommodation space for a battery module (8), **characterized in that**
- the battery pack (2) has a battery module (8) according to any of Claims 1 to 8 accommodated in the accommodation space.

10. Battery pack according to Claim 9, **characterized in that** the battery pack (2) has, in the battery pack interior (6), on the side of the safety wall section (30) of the battery module housing (10), a clearance region, such that the battery module (8) is spaced apart in this region from the battery pack housing (4) and other battery modules (8) in the battery pack (2).

11. Battery pack according to Claim 9 or 10, **characterized in that** the battery pack housing (4) has a safety wall section (30) which is in line with the safety wall section (30) of the battery module housing (4) and has such material properties and such a thickness that the safety wall section (30), in the needle flame test to DIN EN ISO 11925-2, burns through after not more than 45 s.

12. Battery pack according to Claim 11, **characterized in that** the entire battery pack housing (4) comprises a polycarbonate material, the polycarbonate material comprised by the entire battery pack housing (4) being a polycarbonate composition containing the following components A + B + C or A + B* + C, and in each case optionally components D, E and/or F, with the proportions specified in each case:
A) 70.0 to 90.0 parts by weight (based on the sum total of the parts by weight of components A + B + C or A + B* + C) of linear and/or branched aromatic polycarbonate and/or aromatic polyester carbonate,
B) 6.0 to 15.0 parts by weight (based on the sum total of the parts by weight of components A + B + C) of at least one graft polymer comprising
B.1) 5% to 40% by weight (based in each case on the graft polymer B) of a shell composed of at least one vinyl monomer and
B.2) 95% to 60% by weight (based in each case on the graft polymer B) of one or more graft bases composed of silicone-acrylate composite rubber,
B*) 6.0 to 15.0 parts by weight (based on the sum total of the parts by weight of components A + B* + C) of at least one graft polymer comprising
B*.1) 5 to 95 of a mixture of
B*.1.1) 50 to 95 parts by weight of styrene, α-methylstyrene, styrene with methyl substitution on the ring, C₁- to C₈-alkyl methacrylate, C₁- to C₈-alkyl acrylate or mixtures of these compounds and
B*.1.2) 5 to 50 parts by weight of acrylonitrile, methacrylonitrile, C₁- to C₈-alkyl methacrylates, C₁-to C₈-alkyl acrylate, maleic anhydride, C₁- to C₄-alkyl- or -phenyl-N-substituted maleimides or mixtures of these compounds, grafted onto
B*.2) 5 to 95 parts by weight of a rubber-containing butadiene- or acrylate-based graft base,
C) 2.0 to 15.0 parts by weight (based on the sum total of the parts by weight of components A + B + C or A + B* + C) of phosphorus compounds selected from the groups of mono- and oligomeric phosphoric and phosphonic esters, phosphonate amines, phosphazenes and phosphinates, and mixtures of these compounds,
D) 0 to 3.0 parts by weight (based on the sum total of the parts by weight of components A + B + C or A + B* + C) of anti-dripping agent,
E) 0-3.0 parts by weight (based on the sum total of the parts by weight of components A + B + C or A + B* + C) of thermoplastic vinyl (co)polymer (E.1) and/or polyalkylene terephthalate (E.2), and
F) 0 to 20.0 parts by weight (based on the sum total of the parts by weight of components A + B + C or A + B* + C) of further additives,
where the compositions are preferably free of rubber-free polyalkyl(alkyl)acrylate, and where all the parts by weight stated in the present application are normalized such that the sum total of the parts by weight of components A + B + C or A + B* + C in the composition add up to 100 and where the material of the safety wall section (30) of the battery pack (2) and the material in regions of the battery pack housing (4) other than in the region of the safety wall section (30) is the same and the wall thickness in the region of the safety wall section (30) is lower than in the other regions of the battery pack housing (4).

13. Electrical vehicle (42), **characterized in that** the electrical vehicle (42) has a battery module (8) according to any of Claims 1 to 8 and/or a battery pack (2) according to any of Claims 9 to 12.

## Revendications

1. Module de batterie (8)
- comprenant un boîtier de module de batterie (10),
- le boîtier de module de batterie (10) délimitant un espace intérieur de module de batterie (12) et
- le boîtier de module de batterie (10) comprenant des logements (14) du côté de l'espace intérieur du module de batterie, destinés à recevoir un nombre prédéfini de cellules de batterie (16),
- le boîtier de module de batterie (10) comprenant dans la zone d'au moins un logement (14) un segment de paroi de sécurité (20), dont les propriétés matérielles et l'épaisseur sont telles que, dans l'essai à la petite flamme selon DIN EN ISO 11925-2, le segment de paroi de sécurité (20) présente une défaillance par perforation au bout d'une durée de 45 s au maximum,
l'épaisseur de paroi dans la zone du segment de paroi de sécurité (20) étant plus petite que dans les autres zones du boîtier de module de batterie (10),
et le segment de paroi de sécurité (20) présentant une épaisseur dans la plage allant de 0,5 mm à 3 mm, **caractérisé en ce que** le matériau du segment de sécurité (20) et le matériau dans d'autres zones du boîtier de module de batterie (10) que dans la zone du segment de paroi de sécurité (20) sont les mêmes et l'ensemble du boîtier de module de batterie comprend un matériau polycarbonate.

2. Module de batterie (8) selon la revendication 1, **caractérisé en ce que** le segment de paroi de sécurité (20) est agencé dans une zone du logement (14) conçue pour le logement (14) du côté inférieur d'une cellule de batterie (16).

3. Module de batterie (8) selon la revendication 1 ou 2, **caractérisé en ce que** le matériau polycarbonate compris par l'ensemble du boîtier de module de batterie (10) est une composition de polycarbonate qui contient les composants suivants : A + B + C ou A + B* + C, ainsi qu'éventuellement à chaque fois les composants D, E et/ou F, en les proportions respectives indiquées :
A) 70,0 à 90,0 parties en poids (par rapport à la somme des parties en poids des composants A + B + C ou A + B* + C) d'un polycarbonate aromatique linéaire et/ou ramifié et/ou d'un polyester-carbonate aromatique,
B) 6,0 à 15,0 parties en poids (par rapport à la somme des parties en poids des composant A + B + C) d'au moins un polymère greffé avec
B.1) 5 à 40 % en poids (à chaque fois par rapport au polymère greffé B) d'une enveloppe en au moins un monomère de vinyle, et
B.2) 95 à 60 % en poids (à chaque fois par rapport au polymère greffé B) d'une ou de plusieurs bases de greffage en caoutchouc composite silicone-acrylate,
B*) 6,0 à 15,0 parties en poids (par rapport à la somme des parties en poids des composants A + B* + C) d'au moins un polymère greffé avec
B*.1) 5 à 95 d'un mélange de
B*.1.1) 50 à 95 parties en poids de styrène, d'α-méthylstyrène, de styrène à substitution méthyle sur le noyau, de méthacrylate d'alkyle en C₁ à C₈, d'acrylate d'alkyle en C₁ à C₈ ou de mélanges de ces composés, et
B*.1.2) 5 à 50 parties en poids d'acrylonitrile, de méthacrylonitrile, de méthacrylates d'alkyle en C₁ à C₈, d'acrylate d'alkyle en C₁ à C₈, d'anhydride de l'acide maléique, de maléinimides N-substitués avec alkyle en C₁ à C₄ ou phényle, ou de mélanges de ces composés, sur
B*.2) 5 à 95 parties en poids d'une base de greffage contenant du caoutchouc à base de butadiène ou d'acrylate,
C) 2,0 à 15,0 parties en poids (par rapport à la somme des parties en poids des composants A + B + C ou A + B* + C) de composés de phosphore, choisis dans les groupes des esters de l'acide phosphorique et phosphonique mono- et oligomères, des phosphonatamines, des phosphazènes et des phosphinates, ainsi que de mélanges de ces composés,
D) 0 à 3,0 parties en poids (par rapport à la somme des parties en poids des composants A + B + C ou A + B* + C) d'agents anti-égouttement,
E) 0 à 3,0 parties en poids (par rapport à la somme des parties en poids des composants A + B + C ou A + B* + C) d'un (co)polymère de vinyle thermoplastique (E.1) et/ou de polyalkylène téréphtalate (E.2), et
F) 0 à 20,0 parties en poids (par rapport à la somme des parties en poids des composants A + B + C ou A + B* + C) d'autres additifs,
les compositions étant de préférence exemptes d'acrylate de polyalkyl(alkyle) sans caoutchouc et toutes les indications de parties en poids dans la présente demande étant normées de sorte que la somme des parties en poids des composants A + B + C ou A + B* + C dans la composition soient de 100.

4. Module de batterie (8) selon l'une quelconque des revendications 1 à 3, **caractérisé en ce que** le boîtier de module de batterie (10) est nervuré au moins dans la zone du segment de paroi de sécurité (20).

5. Module de batterie (8) selon l'une quelconque des revendications précédentes, **caractérisé en ce que** le module de batterie (8) comprend le nombre prédéfini de cellules de batterie (16), les cellules de batterie (16) individuelles étant agencées dans les logements (14), au moins une des cellules de batterie (16) comprenant une position de rupture pour la sortie d'une flamme (18) dans une direction préférentielle et la cellule de batterie (16) étant agencée dans un logement (14) de sorte que la direction préférentielle corresponde au segment de paroi de sécurité (20) du logement (14).

6. Module de batterie (8) selon l'une quelconque des revendications précédentes, **caractérisé en ce que** le boîtier de module de batterie (10) et le segment de paroi de sécurité (20) satisfont au moins la classification V-2 selon UL-94.

7. Module de batterie (8) selon l'une quelconque des revendications précédentes, **caractérisé en ce que** les propriétés matérielles et l'épaisseur du segment de paroi de sécurité (20) sont telles que, dans l'essai à la petite flamme selon DIN EN ISO 11925-2, le segment de paroi de sécurité (20) présente une défaillance par perforation au bout d'une durée de 20 s au maximum, de manière davantage préférée de 10 s au maximum, notamment de 5 s au maximum.

8. Module de batterie (8) selon la revendication 1, **caractérisé en ce que** le segment de paroi de sécurité (20) présente une épaisseur dans la plage allant de 0,8 mm à 3 mm, et le boîtier de module de batterie restant présente dans d'autres zones que dans la zone du segment de paroi de sécurité (20) une épaisseur de 3 mm à 5 mm.

9. Bloc batterie (2),
- comprenant un boîtier de bloc batterie (4),
- le boîtier de bloc batterie (4) délimitant un espace intérieur de bloc batterie (6) et
- le boîtier de bloc batterie (4) comprenant au moins un logement du côté de l'espace intérieur du bloc batterie, destiné à recevoir un module de batterie (8), **caractérisé en ce que**
- le bloc batterie (2) comprend un module de batterie (8) selon l'une quelconque des revendications 1 à 8 logé dans le logement.

10. Bloc batterie selon la revendication 9, **caractérisé en ce que** le bloc batterie (2) comprend dans l'espace intérieur du bloc batterie (6) du côté du segment de paroi de sécurité (30) du boîtier de module de batterie (10) une zone d'espace libre, de sorte que le module de batterie (8) soit espacé dans cette zone du boîtier de bloc batterie (4) et d'autres modules de batterie (8) dans le bloc batterie (2).

11. Bloc batterie selon la revendication 9 ou 10, **caractérisé en ce que** le boîtier de bloc batterie (4) comprend un segment de paroi de sécurité (30) correspondant au segment de paroi de sécurité (30) du boîtier de module de batterie (4), dont les propriétés matérielles et l'épaisseur sont telles que, dans l'essai à la petite flamme selon DIN EN ISO 11925-2, le segment de paroi de sécurité (30) présente une défaillance par perforation au bout d'une durée de 45 s au maximum.

12. Bloc batterie selon la revendication 11, **caractérisé en ce que** l'ensemble du boîtier de bloc batterie (4) comprend un matériau polycarbonate, le matériau polycarbonate compris par l'ensemble du boîtier de bloc batterie (4) étant une composition de polycarbonate qui contient les composants suivants : A + B + C ou A + B* + C, ainsi qu'éventuellement à chaque fois les composants D, E et/ou F, en les proportions respectives indiquées :
A) 70,0 à 90,0 parties en poids (par rapport à la somme des parties en poids des composants A + B + C ou A + B* + C) d'un polycarbonate aromatique linéaire et/ou ramifié et/ou d'un polyester-carbonate aromatique,
B) 6,0 à 15,0 parties en poids (par rapport à la somme des parties en poids des composant A + B + C) d'au moins un polymère greffé avec
B.1) 5 à 40 % en poids (à chaque fois par rapport au polymère greffé B) d'une enveloppe en au moins un monomère de vinyle, et
B.2) 95 à 60 % en poids (à chaque fois par rapport au polymère greffé B) d'une ou de plusieurs bases de greffage en caoutchouc composite silicone-acrylate,
B*) 6,0 à 15,0 parties en poids (par rapport à la somme des parties en poids des composants A + B* + C) d'au moins un polymère greffé avec
B*.1) 5 à 95 d'un mélange de
B*.1.1) 50 à 95 parties en poids de styrène, d'α-méthylstyrène, de styrène à substitution méthyle sur le noyau, de méthacrylate d'alkyle en C₁ à C₈, d'acrylate d'alkyle en C₁ à C₈ ou de mélanges de ces composés, et
B*.1.2) 5 à 50 parties en poids d'acrylonitrile, de méthacrylonitrile, de méthacrylates d'alkyle en C₁ à C₈, d'acrylate d'alkyle en C₁ à C₈, d'anhydride de l'acide maléique, de maléinimides N-substitués avec alkyle en C₁ à C₄ ou phényle, ou de mélanges de ces composés, sur
B*.2) 5 à 95 parties en poids d'une base de greffage contenant du caoutchouc à base de butadiène ou d'acrylate,
C) 2,0 à 15,0 parties en poids (par rapport à la somme des parties en poids des composants A + B + C ou A + B* + C) de composés de phosphore, choisis dans les groupes des esters de l'acide phosphorique et phosphonique mono- et oligomères, des phosphonatamines, des phosphazènes et des phosphinates, ainsi que de mélanges de ces composés,
D) 0 à 3,0 parties en poids (par rapport à la somme des parties en poids des composants A + B + C ou A + B* + C) d'agents anti-égouttement,
E) 0 à 3,0 parties en poids (par rapport à la somme des parties en poids des composants A + B + C ou A + B* + C) d'un (co)polymère de vinyle thermoplastique (E.1) et/ou de polyalkylène téréphtalate (E.2), et
F) 0 à 20,0 parties en poids (par rapport à la somme des parties en poids des composants A + B + C ou A + B* + C) d'autres additifs,
les compositions étant de préférence exemptes d'acrylate de polyalkyl(alkyle) sans caoutchouc et toutes les indications de parties en poids dans la présente demande étant normées de sorte que la somme des parties en poids des composants A + B + C ou A + B* + C dans la composition soient de 100, et le matériau du segment de paroi de sécurité (30) du bloc batterie (2) et le matériau dans d'autres zones du boîtier de bloc batterie (4) que dans la zone du segment de paroi de sécurité (30) étant les mêmes, et l'épaisseur de paroi dans la zone du segment de paroi de sécurité (30) étant plus faible que dans les autres zones du boîtier de bloc batterie (4).

13. Véhicule électrique (42), **caractérisé en ce que** le véhicule électrique (42) comprend un module de batterie (8) selon l'une quelconque des revendications 1 à 8 et/ou un bloc batterie (2) selon l'une quelconque des revendications 9 à 12.
